# EUROPEAN PATENT APPLICATION

(11) **EP 4 738 386 A1**
(43) Date of publication of application: **06.05.2026**
(21) Application number: 24831618.4
(22) Date of filing: 06.06.2024
(51) Int. Cl.: H01B 1/06, H01M 4/13, H01M 4/62, H01M 10/052, H01M 10/0562

(54) **METHOD FOR PRODUCING HALIDE SOLID ELECTROLYTE, HALIDE SOLID ELECTROLYTE, POSITIVE ELECTRODE MATERIAL, AND BATTERY**

(30) Priority: 29.06.2023 JP 2023107586
(71) Applicant: Panasonic Intellectual Property Management Co., Ltd., Kadoma-shi, Osaka 571-0057 (JP)
(72) Inventor: KOGA, Eiichi, Kadoma-shi Osaka 571-0057 (JP)
(74) Representative: Eisenführ Speiser
(86) International application number: PCT/JP2024/020789
(87) International publication number: WO 2025/004748

(57) **Abstract**

A production method for a halide solid electrolyte of the present disclosure includes (A) performing halogenation treatment on an oxide mixture including a composite oxide containing Li and Ti and an oxide raw material containing Li and M, to obtain a halide solid electrolyte containing Li, Ti, M, and X. The M is at least one element selected from the group consisting of metal elements (excluding Li and Ti) and metalloid elements, and the X is at least one selected from the group consisting of F, Cl, Br, and I.

## Description

### TECHNICAL FIELD

The present disclosure relates to a production method for a halide solid electrolyte, a halide solid electrolyte, a positive electrode material, and a battery.

### BACKGROUND ART

Patent Literature 1 discloses a halide-based solid electrolyte material. In addition, Patent Literature 2 discloses a halide-based solid electrolyte material as a solid electrolyte material that coats the surface of a positive electrode active material.

### CITATION LIST

### Patent Literature

Patent Literature 1: WO 2021/186809
Patent Literature 2: WO 2021/187391

### SUMMARY OF INVENTION

### Technical Problem

The present disclosure aims to provide a novel production method that allows a halide solid electrolyte having a target composition to be stably synthesized.

### Solution to Problem

A production method for a halide solid electrolyte of the present disclosure includes
(A) performing halogenation treatment on an oxide mixture including a composite oxide containing Li and Ti and an oxide raw material containing Li and M, to obtain a halide solid electrolyte containing Li, Ti, M, and X, wherein
   the M is at least one element selected from the group consisting of metal elements (excluding Li and Ti) and metalloid elements, and
   the X is at least one selected from the group consisting of F, Cl, Br, and I.

### Advantageous Effects of Invention

The present disclosure provides a novel production method that allows a halide solid electrolyte having a target composition to be stably synthesized.

### BRIEF DESCRIPTION OF THE DRAWINGS

FIG. 1 is a flowchart showing an example of a production method for a halide solid electrolyte according to a first embodiment.
FIG. 2 is a flowchart showing an example of a production method for a halide solid electrolyte according to a second embodiment.
FIG. 3 is a flowchart showing a modification of the production method for a halide solid electrolyte according to the second embodiment.
FIG. 4 is a flowchart showing an example of a production method for a halide solid electrolyte according to a third embodiment.
FIG. 5 illustrates a cross-sectional view of a battery 1000 according to a fourth embodiment.
FIG. 6A is a graph showing an X-ray diffraction pattern of a halide solid electrolyte after heat treatment and before pulverization treatment in a production method of Example 1.
FIG. 6B is a graph showing X-ray diffraction patterns of a halide solid electrolyte after pulverization treatment obtained in Example 1 and a halide solid electrolyte obtained in Comparative Example 1.

### DESCRIPTION OF EMBODIMENTS

Hereinafter, embodiments of the present disclosure will be specifically described with reference to the drawings.

The embodiments described below are all comprehensive or specific examples. The numerical values, shapes, materials, components, etc., shown in the following embodiments are examples, and are not intended to limit the present disclosure. In addition, among the components in the following embodiments, the components that are not described in the independent claims that represent broadest concepts are described as discretionary components.

### [First Embodiment]

Hereinafter, a production method for a halide solid electrolyte according to a first embodiment will be described.

The production method according to the first embodiment includes
(A) performing halogenation treatment on an oxide mixture including a composite oxide containing Li and Ti and an oxide raw material containing Li and M, to obtain a halide solid electrolyte containing Li, Ti, M, and X.
Here, M is at least one element selected from the group consisting of metal elements (excluding Li and Ti) and metalloid elements, and X is at least one selected from the group consisting of F, Cl, Br, and I.

The "metalloid elements" are B, Si, Ge, As, Sb, and Te. The "metal elements" are all elements included in Groups 1 to 12 of the periodic table (excluding hydrogen) and all elements included in Groups 13 to 16 of the periodic table (excluding B, Si, Ge, As, Sb, Te, C, N, P, O, S, and Se). That is, the "metal elements" are a group of elements that can become cations when halogen compounds and inorganic compounds are formed.

With the production method according to the first embodiment, a halide solid electrolyte having a target composition can be stably synthesized. Hereinafter, the reason for this will be described in more detail.

In order to produce a halide solid electrolyte containing Ti, a titanium halide (e.g., TiX₄) is normally used as a Ti source in a conventional production method. However, a titanium halide is a relatively unstable substance that easily evaporates and also has deliquescence properties, etc. Therefore, the produced halide solid electrolyte may cause compositional variations (i.e., compositional deviation) and alterations (e.g., incorporation of moisture, etc.). Accordingly, in the conventional production method, it may be difficult to stably obtain a target halide solid electrolyte. In contrast, in the production method according to the first embodiment, the composite oxide containing Li and Ti can be used as a Ti source. Therefore, in the production method according to the first embodiment, it is not necessary to use the above unstable titanium halide in the synthesis of a halide solid electrolyte containing Ti, and it is also less likely to generate a titanium halide in the synthesis process. Therefore, the production method according to the first embodiment is less likely to cause compositional variations, alterations, etc., to occur in the produced halide solid electrolyte and allows a Ti-containing halide solid electrolyte having excellent characteristics such as ionic conductivity to be synthesized stably with good reproducibility. That is, with the production method according to the first embodiment, a halide solid electrolyte having a target composition can be stably synthesized.

In the above (A), the halogenation treatment on the oxide mixture may be performed, for example, at a temperature of 150°C or higher. By performing the halogenation treatment at a temperature of 150°C or higher, the oxide mixture can be sufficiently halogenated. The temperature during the halogenation treatment may be, for example, 600°C or lower. As the atmosphere for the halogenation treatment, for example, any atmosphere suitable for a halogen-containing substance to be used, such as atmospheric air, a nitrogen atmosphere, and a reducing atmosphere, can be selected as appropriate.

In the above (A), the halogenation treatment on the oxide mixture may be performed, for example, by performing heat treatment on a halogen-containing substance having thermal decomposition properties.

By performing the halogenation treatment on the oxide mixture through the heat treatment on the halogen-containing substance having thermal decomposition properties, halogenation of the oxide mixture and a solid-phase reaction for synthesizing the halide solid electrolyte can be caused to occur simultaneously. Therefore, a homogeneous solid electrolyte having excellent characteristics can be obtained in a short time while reducing reaction residues such as oxides. In addition, since the halogenation treatment is performed by performing the heat treatment on the halogen-containing substance having thermal decomposition properties, the reactivity (halogenation properties) of the oxide mixture is good, and the productivity is also excellent. Furthermore, for example, the temperatures of the halogenation reaction and the solid-phase reaction of the oxide mixture and the progress of these reactions can also be controlled according to the thermal decomposition temperature of the halogen-containing substance to be selected. Thus, the desired halide solid electrolyte can be obtained.

In the case where a halogen-containing substance having thermal decomposition properties is used for the halogenation treatment on the oxide mixture, in the production method according to the first embodiment, the above (A) may include
(A-1) mixing the oxide mixture and the halogen-containing substance, and
(A-2) performing the halogenation treatment on the oxide mixture by performing heat treatment on a mixture including the oxide mixture and the halogen-containing substance obtained in the above (A-1).

In the production method according to the first embodiment, by performing the above (A-1) and the above (A-2), the heat treatment for the halogenation treatment can be performed on a homogeneous mixture obtained by mixing the oxide mixture and the halogen-containing substance. In addition, the contact area between the oxide mixture and the halogen-containing substance can be increased. Accordingly, the halogenation of the oxide mixture is uniformly promoted, and thus a homogeneous halide solid electrolyte having excellent characteristics can be obtained.

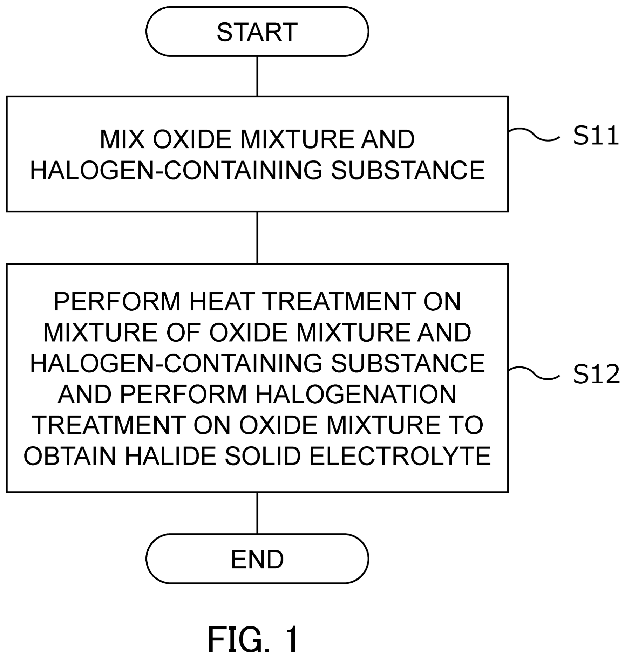

FIG. 1 is a flowchart showing an example of the production method for a halide solid electrolyte according to the first embodiment. Here, an example of a production method in which the above (A-1) and the above (A-2) are performed will be described as an example of the production method according to the first embodiment.

As shown in FIG. 1, in an example of the production method according to the first embodiment, first, as a step corresponding to the above (A-1), an oxide mixture and a halogen-containing substance are mixed (S11). As described above, the oxide mixture includes a composite oxide containing Li and Ti and an oxide raw material containing Li and M. The halogen-containing substance has thermal decomposition properties. Next, as a step corresponding to the above (A-2), halogenation treatment is performed on the oxide mixture by performing heat treatment on the obtained mixture including the oxide mixture and the halogen-containing substance (S12). Accordingly, a halide solid electrolyte containing Li, Ti, M, and X is obtained.

Hereinafter, the oxide mixture, the halogen-containing substance, and the respective steps corresponding to the above (A-1) and the above (A-2) will be specifically described.

### <Oxide Mixture>

The oxide mixture includes a composite oxide containing Li and Ti and an oxide raw material containing Li and M.

The composite oxide containing Li and Ti only has to contain at least Li, Ti, and O and may further contain another cation. By using the composite oxide containing Li and Ti as a Ti source, compositional variations and alterations of the halide solid electrolyte can be suppressed, and, for example, the desired halide solid electrolyte having high ionic conductivity and reliability can be produced. According to the production method of the first embodiment, it is not necessary to use a titanium oxide (e.g., TiO₂) as a Ti source. Regardless of crystal system (rutile, anatase), the titanium oxide is likely to generate a titanium halide (e.g., TiX₄), which is likely to cause problems of evaporation and deliquescence, in the process of halogenation. Therefore, the Ti component may disappear in the synthesis process or moisture may be contained due to the deliquescence of the titanium halide, which may lead to deviation from the desired composition. Therefore, the titanium halide may cause a decrease in the ionic conductivity and the reliability of the solid electrolyte. In the production method according to the first embodiment, since the composite oxide containing Li and Ti can be used as a Ti source, it is not necessary to use the titanium oxide. Therefore, it is possible to suppress compositional variations and alterations of the halide solid electrolyte caused by using the titanium oxide as described above.

For the above reasons, it is desirable that the oxide mixture should be substantially free of TiO₂. Here, in this description, "the oxide mixture is substantially free of TiO₂" means that the content ratio of TiO₂ in the entire oxide mixture is 0.3 mass% or less.

The above composite oxide may include, for example, Li₂TiO₃. Li₂TiO₃ has excellent stability in a normal atmosphere (including moisture) and also has excellent stability for high temperatures up to about 800°C. By using Li₂TiO₃ as the composite oxide, a halide solid electrolyte including a crystal phase represented by Li₂TiX₆ can be produced.

The oxide raw material containing Li and M includes, for example, an oxide of Li and an oxide of M. By using the oxide of Li and the oxide of M as the oxide raw material, a halide solid electrolyte having a target composition can be more stably synthesized.

M may be at least one selected from the group consisting of Al, Y, Ga, Dy, Ho, Er, Tm, and Yb. M may be at least one selected from the group consisting of Al and Y. When M includes the above element, a halide solid electrolyte having high ionic conductivity can be obtained.

M may include Al. When M includes Al, a halide solid electrolyte having high ionic conductivity can be obtained. M may be Al.

As the oxide raw material, for example, metal oxides such as Li₂O and Al₂O₃ can be used. The oxide raw material may include Li₂O and Al₂O₃.

The oxide mixture may be, for example, in particle form. That is, the composite oxide and the oxide raw material constituting the oxide mixture may each be in particle form. Accordingly, it becomes easier for halogenation (i.e., substitution of halogen and oxygen elements) from the particle surface of the oxide mixture and the solid-phase reaction in the oxide mixture to occur simultaneously. Therefore, a halide can be synthesized in a short time while reducing reaction residues such as oxides. Thus, a homogeneous halide solid electrolyte having excellent characteristics can be obtained. In addition, the particulate oxide mixture has good reactivity such as halogenation properties and solid-phase reactivity, and thus excellent productivity can also be achieved.

The composite oxide such as Li₂TiO₃ may have, for example, an average particle diameter of 0.5 µm or more and 20 µm or less. However, the average particle diameter of the composite oxide is not limited to the above range, and any particle diameter and shape can be selected as appropriate from the viewpoint of halogenation and solid-phase reaction with the oxide raw material. For example, the smaller the particle diameter of the composite oxide is, the lower the conversion temperature from the composite oxide to the halide can be made.

The average particle diameter of the composite oxide is the median diameter of the composite oxide and means a particle diameter (d50) equivalent to 50% of the cumulative volume obtained from a particle size distribution measured on a volume basis by a laser diffraction scattering method. The same applies to the average particle diameters of the oxide raw material and the halogen-containing substance specified in this description.

The oxide raw material such as Li₂O and Al₂O₃ may have an average particle diameter of 0.5 µm or more and 20 µm or less, for example. As with the composite oxide, the oxide raw material may have any particle diameter and shape.

### <Halogen-Containing Substance>

The halogen-containing substance has thermal decomposition properties. For example, in the case where the halide solid electrolyte to be produced contains F as the halogen element X, a fluorine-containing substance serving as a fluorine source is used as the halogen-containing substance.

The thermal decomposition-starting temperature of the halogen-containing substance to be used may be, for example, 100°C or higher and 600°C or lower. When the halogen-containing substance has a thermal decomposition-starting temperature within the above temperature range, the halogen-containing substance can have stability in storage and handling such as mixing, and the obtained halide solid electrolyte can be prevented from becoming excessively hard.

The halogen element X may include F or may be F. Accordingly, a halide solid electrolyte having excellent stability (e.g., excellent electrochemical stability and heat resistance) and having high ionic conductivity can be obtained.

The halogen-containing substance may be, for example, in particle form. Accordingly, the halogen-containing substance easily becomes thermally decomposed. Therefore, by using the particulate halogen-containing substance, the oxide mixture can be efficiently halogenated, and the halogen-containing substance is less likely to be caused to remain in the finally obtained halide solid electrolyte. In addition, by using the particulate halogen-containing substance, precise control of the halogen amount is enabled. Thus, the synthesis of the desired halide solid electrolyte becomes easier. Moreover, the halogen-containing substance can be used in an amount required for the halogenation of the oxide mixture, so that excess halogen gas emission can be suppressed. Therefore, the environmental impact is reduced and the influence on corrosion of a furnace material, etc., is also reduced.

The halogen-containing substance, for example, may have an average particle diameter of 0.5 µm or more and 500 µm or less, may have an average particle diameter of 0.5 µm or more and 150 µm or less, or may have an average particle diameter of 0.5 µm or more and 100 µm or less. As with the composite oxide and the oxide raw material, the halogen-containing substance may also have any particle diameter and shape.

The average particle diameter of the halogen-containing substance may be larger than the average particle diameter of the oxide mixture. This results in a state where the surface area of the oxide mixture is larger than that of the halogen-containing substance, that is, the surface exposure area (i.e., exposure area) of the oxide mixture is larger. Therefore, it becomes easier for halogenation to proceed from the particle surface of the oxide mixture, so that a homogeneous halide can be obtained. The average particle diameter of the halogen-containing substance may be 5 µm or more and 100 µm or less, may be 5 µm or more and 20 µm or less, or may be 50 µm or more and 100 µm or less. The average particle diameter of the halogen-containing substance can be adjusted as appropriate in consideration of the temperature or reactivity of halogenation. For example, by increasing the average particle diameter of the halogen-containing substance, the heat treatment temperature for the halogenation treatment is increased.

The halogen-containing substance may include an ammonium salt. The thermal decomposition of the ammonium salt starts at a relatively low temperature (e.g., about 150°C). Therefore, the ammonium salt is less likely to remain as an unnecessary inorganic component in the finally obtained halide solid electrolyte and can be thermally decomposed at a low temperature to halogenate the oxide mixture. Therefore, by using the ammonium salt as the halogen-containing substance, an unnecessary inorganic component derived from the halogen-containing substance can be inhibited from remaining in the finally obtained halide solid electrolyte. Furthermore, the energy for synthesis is saved, and the heating and cooling times are reduced, so that the productivity is also improved. Moreover, since synthesis at a low temperature is possible, the durability of the furnace material is improved, and the running cost and replacement frequency of a synthetic member are also significantly reduced. As the halogen-containing substance, the ammonium salt by itself may be used.

The ammonium salt may include NH₄F. NH₄F is a highly decomposable fluorine source and can act effectively on the halogenation of the oxide mixture. Therefore, NH₄F can fluorinate the oxide mixture without remaining in the solid electrolyte, while being thermally decomposed at a low temperature (e.g., about 150°C) and a high decomposition rate. Ammonium salts of other halogen elements, such as NH₄Cl and NH₄Br, also have thermal decomposition properties and thus can be similarly used as a halogen source.

The halogen-containing substance may include a resin. By including a resin as the halogen-containing substance, the halogen-containing substance can halogenate the oxide mixture while being thermally decomposed at a relatively high temperature (e.g., about 450°C or higher and 600°C or lower). Therefore, the method in which the resin is included as the halogen-containing substance is suitable for the case where it is desired to carry out the halogenation and the solid-phase reaction at a relatively high temperature (e.g., about 450°C or higher and 600°C or lower).

An example of the resin used as the halogen-containing substance is a fluorine resin. For example, polytetrafluoroethylene (PTFE), polyvinylidene fluoride (PVDF), etc., can be used. The fluorine resin such as PTFE can halogenate the oxide mixture while being thermally decomposed at a relatively high temperature (e.g., about 450°C or higher and 600°C or lower). Therefore, the method in which the fluorine resin is included as the halogen-containing substance is suitable for the case where it is desired to carry out the halogenation and the solid-phase reaction at a relatively high temperature (e.g., about 450°C or higher and 600°C or lower).

The halogen-containing substance may include, for example, a substance from which the inorganic components generated by thermal decomposition during the heat treatment in the above (A), other than halogen elements, are substantially not incorporated into the produced halide solid electrolyte. For the halogen-containing substance used for the halogenation treatment, it is required that while the halogen element generated by thermal decomposition during the heat treatment in the above (A) is replacing the oxygen element of the oxide mixture, the other components are not incorporated as inorganic residues into the finally obtained halide solid electrolyte. By using, as the halogen-containing substance, a substance from which the inorganic components generated by thermal decomposition during the heat treatment, other than halogen elements, are substantially not incorporated into the finally obtained halide solid electrolyte, the incorporation of inorganic residues into the halide solid electrolyte can be suppressed, and the desired halide solid electrolyte can be obtained. Here, in this description, "the inorganic components generated by thermal decomposition during the heat treatment, other than halogen elements, are substantially not incorporated into the produced halide solid electrolyte" means that the content ratio of the inorganic components in the halide solid electrolyte is 0.5 mass% or less.

The halogen-containing substance may include a plurality of types of halogen-containing compounds. For example, both the ammonium salt and the fluorine resin can be used as the halogen-containing substance. Accordingly, the temperature range where the halogen-containing substance acts as a halogen source can be controlled to be wide, and thus the conversion of the oxide mixture into the halide and the solid-phase reaction temperature can be controlled over a wide range. Therefore, it becomes easy to obtain the desired halide solid electrolyte.

The amount of the used halogen-containing substance only has to be sufficient to halogenate the entire amount of the compound to be halogenated and is not particularly limited. For example, when the molar amount of the halogen-containing substance for halogenating all of the compound stoichiometrically (i.e., the molar amount equivalent stoichiometrically, in other words, the molar amount required to completely replace the anion of the compound to be halogenated with a halogen anion such as F) in the reaction of halogenating the compound to be halogenated is defined as 100%, the amount of the halogen-containing substance may be, for example 103% or more and 150% or less, may be 103% or more and 130% or less, or may be 103% or more and 110% or less.

### <(A-1)>

In (A-1), the oxide mixture and the halogen-containing substance are mixed. In the mixing of the oxide mixture and the halogen-containing substance, for example, the composite oxide containing Li and Ti, the oxide raw material containing Li and M, and the halogen-containing substance having thermal decomposition properties are uniformly mixed. As described above, the composite oxide, the oxide raw material, and the halogen-containing substance may be mixed simultaneously, or, first, the composite oxide and the oxide raw material may be uniformly mixed to obtain an oxide mixture, and then the oxide mixture and the halogen-containing substance may be mixed.

As described above, before the halogenation treatment, the conversion from the oxide mixture into the halide can be caused to occur uniformly by performing a step of uniformly mixing the composite oxide, the oxide raw material, and the halogen-containing substance as a preliminary step. Accordingly, a homogeneous halide solid electrolyte can be synthesized.

For example, powders of the composite oxide, the oxide raw material, and the halogen-containing substance are mixed at the desired ratio. The powders of the composite oxide, the oxide raw material, and the halogen-containing substance only have to be mixed, for example, by a dry method such that these powders are homogeneous. For example, these powders may be uniformly mixed by repeated mixing with a spatula, or may be mixed using a mortar and a pestle, a grinding machine, a dry mixing device such as a V-blender, or the like. Alternatively, these powders may be mixed using a medium such as zirconia balls. As long as these powders can be mixed uniformly, any mixing means may be used. Uniformity can be evaluated, for example, using energy dispersive X-ray spectroscopy (EDS) or an electron probe microanalyzer (EPMA). For example, uniformity can be confirmed by observing a compositional mapping image.

### <(A-2)>

In (A-2), the halogenation treatment is performed on the oxide mixture by performing heat treatment on the mixture including the oxide mixture and the halogen-containing substance obtained in the above (A-1).

For the heat treatment, a general electric furnace may be used. If necessary, an atmosphere for the heat treatment may be selected, and the heat treatment may be performed in atmospheric air, an inert gas atmosphere (e.g., nitrogen gas or argon gas), or a reducing gas (e.g., hydrogen or carbon dioxide). The synthesized halide is normally obtained as a powder, but when the heat treatment is performed at a temperature equal to or higher than the melting point thereof, the halide may be obtained as a block-like mass formed by the adhesion of melts, sintered bodies, or powder.

In the heat treatment, for example, the above-described uniformly mixed mixture is placed in a heat-resistant container (sagger) made of alumina, and the mixture is fired using a firing furnace in any atmosphere. For example, an inert gas such as nitrogen gas is caused to flow into the furnace, and heat treatment is performed in the atmosphere furnace, for example, at a temperature of 150°C or higher and 600°C or lower, for example, for a time of 1 hour or longer and 40 hours or shorter, while the gases generated by halogenation (e.g., ammonium, hydrogen chloride, carbon dioxide, etc.) are discharged, to synthesize a halide solid electrolyte. As described above, by introducing the gas into the firing furnace and discharging the gases therefrom, unnecessary reactive gas components, etc., are prevented from remaining in the furnace, that is, in the halide solid electrolyte.

It is preferable that the inert gas is introduced into the furnace such that the inert gas does not directly hit the sagger in which the mixture has been placed. Instead of the inert gas, atmospheric air may be introduced into the furnace. A plate larger than a gas introduction port is installed between the gas introduction port and the sagger. The thickness of the plate may be such a thickness that the plate is not damaged by gas flow or handling. For example, it is more preferable to partially shield by merely standing a plate such as an alumina plate upright. As a result of shielding between the gas introduction port and the sagger as described above, the gas comes into contact with the sagger after flowing around the shielding plate. By bringing the gas into indirect contact with the sagger after bypassing as described above, a problem that the temperature is decreased in the portion where the gas directly hits and the temperature distribution in the sagger is increased is reduced. Accordingly, nonuniformity of the distribution of a progressive state (i.e., variation in progressive state) for the synthesis reaction of the halide solid electrolyte by the halogenation reaction and the solid-phase reaction of the oxide mixture is suppressed.

It is preferable that the gas introduction port is installed on the bottom side of the furnace and an exhaust port is provided on the upper side (e.g., on the ceiling side or on the upper side of a side wall). Accordingly, the reactive gases can be smoothly discharged out of the furnace by utilizing the convection (bottom-to-top) flow in the furnace, so that incorporation of unnecessary residual components into the halide solid electrolyte can be reduced.

The gas to be introduced may be heated and then introduced into the furnace. Accordingly, nonuniformity of the temperature distribution in the sagger can be suppressed. Therefore, the synthesis reaction of the halide solid electrolyte is performed uniformly, so that a more homogeneous halide solid electrolyte can be obtained.

The heat treatment temperature is, for example, 150°C or higher and 600°C or lower as described above, and may be 250°C or higher and 550°C or lower. The heat treatment temperature is, for example, 1 hour or longer and 40 hours or shorter as described above. The heat treatment temperature and the heat treatment time can be determined as desired in consideration of the temperature required for the synthesis of the halide solid electrolyte, the time required for the synthesis, the discharge time of the reactive gases, etc.

As the furnace used for the heat treatment, a known firing furnace (e.g., electric furnace) or an atmosphere firing furnace can be used. In order to remove the atmospheric air and moisture between the particles deep in the sagger and completely replace the atmospheric air and moisture with the inert gas, the inert gas may be caused to flow after vacuum replacement. Accordingly, the influence of reactive components and moisture contained in the atmospheric air can be reduced. Vacuum replacement may be performed repeatedly.

The temperature distribution in the sagger during the heat treatment may be within the temperature distribution range of a generally used firing furnace, for example, 30°C. The temperature distribution in the sagger here is the difference between the highest temperature and the lowest temperature in the sagger.

The heat treatment is not for reacting materials that are easy to evaporate, such as titanium halide, and thus the heat treatment does not need to be performed in a sealed environment. The mixture of the oxide mixture and the halogen-containing substance may be placed in the sagger, a lid (e.g., an alumina lid) to prevent debris and foreign objects from falling may be placed if necessary, and the heat treatment may be performed. Therefore, unlike heat treatment in a conventional production method using a halide as a raw material such as a method in which the treatment amount is limited by size as in a seal-type heat treatment tool (i.e., heat treatment for causing a solid-phase reaction of the halide raw material), the heat treatment in the production method according to the first embodiment has very good productivity and workability and possesses significant industrial applicability. With the production method according to the first embodiment, a halide solid electrolyte having excellent ionic conductivity and stability (e.g., electrochemical stability and heat resistance) can be obtained since the method is such a production method having excellent productivity. In the case where the oxide mixture contains a trace amount of titanium oxide as an impurity, a trace amount of a titanium halide (e.g., TiF₄) may be generated. However, by performing the heat treatment in an open atmosphere, that trace amount of titanium halide evaporates and disappears. Therefore, even in such a case, a halide solid electrolyte containing no titanium halide and having excellent characteristics and reliability can be obtained.

The material of the sagger does not have to be alumina. As the sagger, heat-resistant containers made of various dense (e.g., relative density of 98% or more) materials such as mullite and SiC in addition to alumina can be used. From the viewpoint of the reaction between the oxide mixture, the halogen-containing substance, and the halide solid electrolyte accommodated in the sagger and the sagger, a material suitable for the sagger may be selected. In addition to the above-described materials for the sagger, those that are dense, have heat resistance, and have a small heat capacity can be used as the material of the sagger. As the shape of the sagger, various shapes such as a cylindrical shape, a prismatic shape, and a gourd shape can be used.

Here, the example in which the sagger is used for the heat treatment has been described, but the present disclosure is not limited to this. For example, a rotary furnace such as a rotary kiln may be used, or a mixed powder may be sprayed to perform heat treatment, such as spray drying.

As an example of the production method according to the first embodiment, the method in which the above (A-1) and the above (A-2) are performed has been described in detail, but the step of uniformly mixing the oxide mixture and the halogen-containing substance in advance before the halogenation treatment does not necessarily have to be performed. For example, the halogen-containing substance may be added to the oxide mixture, and the heat treatment may be performed without sufficient mixing. In addition, it is desirable to perform the heat treatment for efficient halogenation treatment, but by adding the halogen-containing substance to the oxide mixture and then leaving the oxide mixture at room temperature for a long time, the halogenation of the oxide mixture may be performed.

In the production method according to the first embodiment, an additive may be added to the oxide mixture if necessary before the halogenation treatment. For example, an additive for promoting the halogenation reaction of the oxide mixture, an additive for promoting the solid-phase reaction of the oxide mixture, etc., may be added. Examples of such additives include an oxide containing at least one element selected from the group consisting of Nb, Ga, Zn, Mg, P, K, Na, Ca, Fe, Si, and Cu. For example, when an Nb oxide and a Ga oxide are added to the oxide mixture in small amounts, the reaction temperatures of the halogenation reaction and the solid-phase reaction can be decreased, for example, by about 10°C to 30°C. Accordingly, the halogenation reaction and the solid-phase reaction of the oxide mixture can be promoted. The Nb oxide and the Ga oxide may be added together, or only one of the Nb oxide and the Ga oxide may be added. The addition amount of the additive only has to be selected as appropriate according to the compound to be added, the purpose thereof, etc., and thus is not particularly limited. For example, when the Nb oxide and the Ga oxide are added for the purpose of promoting the halogenation reaction and the solid-phase reaction, the total of the addition amounts of the Nb oxide and the Ga oxide may be, for example, 0.001 mol% or more and 0.3 mol% or less with respect to the oxide mixture.

The additives such as the Nb oxide and the Ga oxide may be, for example, in particle form. Depending on the particle form of each additive and the dispersion state of each additive with respect to the oxide mixture, the action effect of the additive may vary. As for the Nb oxide, Ga oxide, etc., in general, the smaller the particle size is, the higher the obtained effects of the additives such as reaction-promoting effects are. For example, the particle diameter of each additive may be smaller than that of particles of the oxide constituting the oxide mixture. As an example, the additive may be fine particles having a particle diameter of 0.1 µm or less and a BET of 100 m²/g or more. When the Nb oxide and the Ga oxide are used as coarse particles or excessively added, undesired precipitate phases other than solid electrolytes may be generated and ionic conductivity may be reduced. Therefore, it is desirable to adjust the particle size and the addition amount to an appropriate size and amount. For example, it is desirable that for the Nb oxide and the Ga oxide, the particle size and the addition amount should be set to a size and an amount with which Nb and Ga are not detected as composition phases in X-ray diffraction measurement of the finally obtained halide solid electrolyte. Accordingly, a halide solid electrolyte having high ionic conductivity can be synthesized while obtaining a reaction-promoting effect.

The halide solid electrolyte obtained by the production method according to the first embodiment is a solid electrolyte containing Li, Ti, M, and X. In the case where M includes Al and X includes F, the obtained halide solid electrolyte may include, for example, a first crystal phase represented by the following composition formula (1) and a second crystal phase represented by the following composition formula (2).

Composition formula (1): Li₂TiX₆

Composition formula (2): Li₃MX₆

When the halide solid electrolyte including the first crystal phase and the second crystal phase is to be produced, for example, Li₂TiO₃, which is stable in atmospheric environments, can be used as the composite oxide containing Li and Ti. Therefore, TiO₂ does not have to be used as a Ti source. Thus, generation of titanium halide is suppressed during the process of conversion of the oxide mixture into the halide. Owing to the above, a halide solid electrolyte in which compositional variations are suppressed and which has good characteristics can be synthesized stably with good reproducibility in an atmospheric environment. That is, the halide solid electrolyte obtained by the production method according to the first embodiment can have the target composition, so that a halide solid electrolyte having excellent ionic conductivity can be realized. In addition, since generation of titanium halide is suppressed, the need for synthesis in a sealed jig (e.g., solid-phase synthesis in a planetary ball mill or a seal-type heat-resistant container) is eliminated. Therefore, synthesis with excellent productivity is enabled.

In the case where the halide solid electrolyte obtained by the production method according to the first embodiment includes the first crystal phase and the second crystal phase, the halide solid electrolyte can be represented by the following composition formula (3).

Composition formula (3): xLi₂TiX₆-(1-x)Li₃MX₆

Here, in the composition formula (3), x satisfies 0 < x < 1. That is, x represents the composition ratio of Li₂TiX₆ which is the first crystal phase, and (1-x) represents the composition ratio of Li₃MX₆ which is the second crystal phase. In order to improve ionic conductivity, x may satisfy 0.05 ≤ x ≤ 0.5, for example.

In the production method according to the first embodiment, in the case where at least one selected from the group consisting of the Nb oxide and the Ga oxide is used as an additive, the obtained halide solid electrolyte contains at least one selected from the group consisting of Nb and Ga. That is, in this case, the halide solid electrolyte obtained by the production method according to the first embodiment contains Li, Ti, Al, and F and further contains at least one selected from the group consisting of Nb and Ga. Owing to this configuration, a homogeneous halide solid electrolyte having excellent ionic conductivity is obtained. The halide solid electrolyte obtained by the production method according to the first embodiment may consist substantially of Li, Ti, Al, F, Nb, and Ga or may consist only of Li, Ti, Al, F, Nb, and Ga. "The halide solid electrolyte consists substantially of Li, Ti, Al, F, Nb, and Ga" means that the ratio of the total of the amounts of substance of Li, Ti, Al, F, Nb, and Ga to the total of the amounts of substance of all elements constituting the halide solid electrolyte is 90% or more. As an example, this ratio may be 95% or more.

The amount of oxygen as an impurity in the halide solid electrolyte obtained by the production method according to the first embodiment may be 0.5 mass% or less. With the production method according to the first embodiment, a halide solid electrolyte into which a small amount of oxygen is incorporated can be obtained. The amount of oxygen as an impurity in the halide solid electrolyte may be, for example, 0.1 mass% or more.

As described above, in the case where the Nb oxide and the Ga oxide are added as an additive for promoting the reaction of the oxide mixture, Nb and Ga are not detected as composition phases in X-ray diffraction measurement in some cases. Even in such a case, the fact that the halide solid electrolyte contains Nb and Ga can be confirmed by high-sensitivity compositional analysis (area analysis or the like) such as an electron probe microanalyzer (EPMA). The total of the content ratios of Nb and Ga contained in the halide solid electrolyte may be, for example, 0.0003 at.% or more and 0.15 at.% or less. The content ratios of Nb and Ga can be obtained by EPMA or the like.

In the case where the halide solid electrolyte obtained by the production method according to the first embodiment includes the above first crystal phase and the above second crystal phase and further contains at least one selected from the group consisting of Nb and Ga derived from the Nb oxide and the Ga oxide used as an additive, for example, Nb may be mainly taken into the first crystal phase, that is, Li₂TiX₆, and Ga may be mainly taken into the second crystal phase, that is, Li₃MX₆. That is, it is considered that Nb can mainly act to promote a synthesis reaction for Li₂TiX₆ and Ga can mainly act to promote a reaction for Li₃MX₆. Therefore, in the case where the halide solid electrolyte to be produced is a solid electrolyte including the first crystal phase and the second crystal phase, it is desirable to add the Nb oxide and the Ga oxide together.

The halide solid electrolyte obtained by the production method according to the first embodiment can achieve the same high degree of ionic conductivity as a solid electrolyte produced using a halide raw material.

It is desirable that the halide solid electrolyte obtained by the production method according to the first embodiment should be substantially free of TiF₄. Owing to this configuration, temporal changes in characteristics, mechanical properties, etc., of the halide solid electrolyte caused by evaporation and deliquescence of TiF₄ can be suppressed, so that a halide solid electrolyte having excellent characteristics and reliability can be realized. Here, "the halide solid electrolyte is substantially free of TiF₄" means that the content ratio of TiF₄ in the solid electrolyte is, for example, 0.5 mass% or less and desirably 0.1 mass% or less. The content ratio of TiF₄ in the halide solid electrolyte is obtained, for example, from the area ratio of a TiF₄ portion detected by performing compositional analysis for a cross-section of a compacted powder of the halide solid electrolyte or the particle surface of the solid electrolyte through elemental analysis by energy dispersive X-ray spectroscopy (EDS) or an electron probe microanalyzer (EPMA). In the case where the oxide mixture, which is a raw material of the halide solid electrolyte, contains a trace amount of titanium oxide (TiO₂), TiF₄ may be generated in the halogenation process. However, even in this case, by performing the halogenation treatment in an open atmosphere, TiF₄ can be caused to evaporate and disappear. Therefore, a halide solid electrolyte that is substantially free of TiF₄ and has excellent characteristics and reliability can be obtained.

It is desirable for the halide solid electrolyte obtained by the production method according to the first embodiment to satisfy at least one selected from the group consisting of the following (1), (2), and (3) in an X-ray diffraction pattern obtained by X-ray diffraction measurement of the above halide solid electrolyte using Cu-Kα rays.
(1) There is no peak derived from TiF₄.
(2) There is no peak derived from LiF.
(3) There is no peak derived from AlF₃.

Owing to the above configuration, the halide solid electrolyte obtained by the production method according to the first embodiment is substantially free of a compound of TiF₄, LiF, and/or AlF₃ and thus has excellent characteristics and reliability.

Here, in this description, a peak in an X-ray diffraction pattern is defined as a mountain-shaped portion in which an SN ratio (i.e., the ratio of signal S to background noise N) has a value of 1.3 or more and a full width at half maximum is 5° or less. Therefore, the fact that there is no peak means that no mountain-shaped portion recognized as a peak as described above is confirmed.

For example, in the case where the halide solid electrolyte obtained by the production method according to the first embodiment satisfies the configuration of (1) above, that is, there is no peak derived from TiF₄ in the X-ray diffraction pattern, for example, there is no peak within a range where a diffraction angle 2θ is 24° or more and 25° or less.

The halide solid electrolyte obtained by the production method according to the first embodiment may be in particle form. The halide solid electrolyte has relatively soft properties. Therefore, according to this configuration, a relatively soft particulate solid electrolyte can be realized. Therefore, a compacted powder of such a halide solid electrolyte can have high ionic conductivity, can have excellent stability, and can take any shape. Therefore, with the compacted powder of the halide solid electrolyte having such characteristics, a solid electrolyte layer of a battery having excellent characteristics and high reliability can be realized. The size and shape of the halide solid electrolyte particles can be selected as appropriate according to the application.

When the production method according to the first embodiment is compared with the production methods described in Patent Literature 1 and Patent Literature 2, there are differences, as described below.

Patent Literature 1 discloses a halide-based solid electrolyte containing Li, Ti, M, and F. In the solid electrolyte described in Patent Literature 1, "M" is at least one selected from the group consisting of Al and Y. As starting raw materials for the production of this solid electrolyte, oxides such as composite oxides are not used, all materials used are fluorides, and among them, TiF₄ is used. Many fluorides are not stable, and as described above, in particular, titanium fluoride (TiF₄) is likely to evaporate even at a relatively low temperature (e.g., 50°C to 100°C) and is likely to contain moisture. Therefore, it is stated that, in order to suppress compositional variations and alterations of the fluoride raw material, a halide solid electrolyte is synthesized by sealed ball milling in an argon atmosphere having a low dew point (e.g., -60°C or lower). On the other hand, the production method for a halide solid electrolyte according to the first embodiment differs in that a halide solid electrolyte is synthesized from an oxide raw material having high environmental stability and a reaction path. In particular, by using a composite oxide as a Ti source, a reaction path that suppresses generation of titanium fluoride can be selected, so that the problem of compositional variation caused by evaporation and moisture absorption of the unstable Ti component can be eliminated. Therefore, the production method according to the first embodiment is a production method that allows a halide solid electrolyte having excellent characteristics to be synthesized with mass productivity. Therefore, it is clear that, unlike the production method according to the first embodiment, the production method for a solid electrolyte in Patent Literature 1 has problems in terms of evaporation of Ti, synthesis in atmospheric air, and productivity.

Patent Literature 2 discloses a production method for a halide solid electrolyte containing Li, Ti, M1, and F as a part of a positive electrode material. In the solid electrolyte described in Patent Literature 2, "M1" is at least one selected from the group consisting of Ca, Mg, Al, Y, and Zr. However, as with the production method described in Patent Literature 1, a fluoride such as TiF₄ is used as a starting raw material. Therefore, it is considered to have problems such as compositional deviation in the synthesis process as in the production method described in Patent Literature 1. On the other hand, the production method according to the first embodiment is a production method that allows a halide solid electrolyte having excellent characteristics to be synthesized with mass productivity, as described above.

As described above, the production method according to the first embodiment uses an oxide that is stable to the environment (temperature and humidity) as a starting raw material and does not have to synthesize unstable titanium fluoride, etc., in the reaction process. Therefore, the production method according to the first embodiment is superior to the production methods described in Patent Literatures 1 and 2 in that a halide solid electrolyte having excellent characteristics is obtained by suppressing compositional variations, etc., and the mass productivity is also excellent.

### [Second Embodiment]

Hereinafter, a production method for a halide solid electrolyte according to a second embodiment will be described.

The production method according to the second embodiment further includes, after the above (A) in the production method according to the first embodiment,
(B) performing pulverization treatment on the halide solid electrolyte obtained in the above (A).

In the production method according to the second embodiment, by performing the pulverization treatment in the above (B), a halide solid electrolyte having excellent ionic conductivity and reliability can be obtained with a particle size suitable for the application. In addition, at least a part of the halide solid electrolyte can be amorphized, so that ionic conductivity can be improved and the softness of the particles of the halide solid electrolyte can be improved. By improving the softness of the particles of the halide solid electrolyte, the density of a compacted powder of the halide solid electrolyte can be improved. Therefore, with the halide solid electrolyte obtained by the production method according to the second embodiment, a dense compacted powder having high ionic conductivity can be formed.

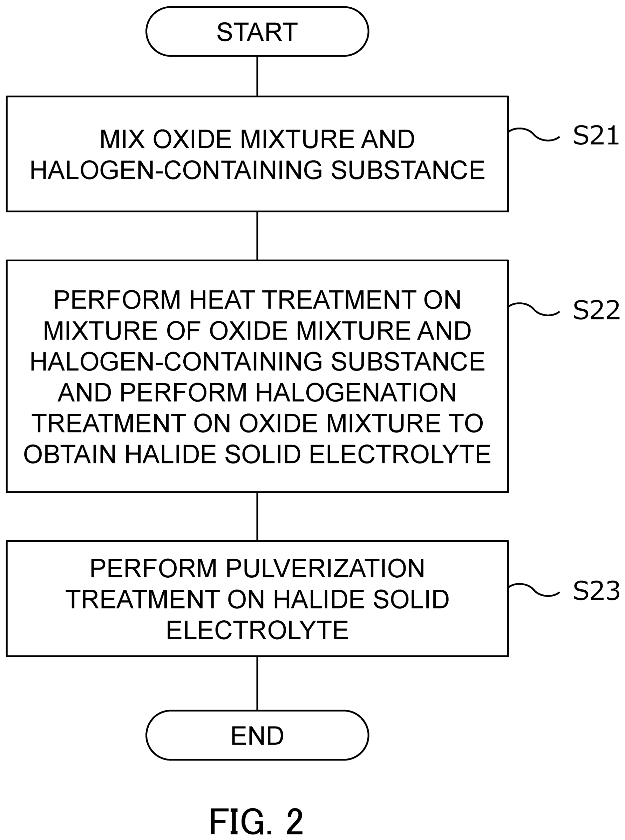

FIG. 2 is a flowchart showing an example of the production method for a halide solid electrolyte according to the second embodiment. Here, an example of a production method in which the above (B) is performed after the above (A-2) in the production method in which the above (A-1) and the above (A-2) are performed as the above (A) and which is an example of the production method described in the first embodiment, will be described.

As shown in FIG. 2, first, an oxide mixture and a halogen-containing substance are mixed (S21). Next, halogenation treatment is performed on the oxide mixture by performing heat treatment on the obtained mixture including the oxide mixture and the halogen-containing substance (S22). Accordingly, a halide solid electrolyte containing Li, Ti, M, and X is obtained. Next, as a step corresponding to the above (B), pulverization treatment is performed on the halide solid electrolyte obtained in S22 (S23).

S21 and S22 are the same as S11 and S12 described in the first embodiment, respectively, and thus the detailed description thereof is omitted here.

The halide solid electrolyte synthesized by the above (A) has an average particle diameter of about 3 µm or more and 20 µm or less, for example. In the above (B), the pulverization treatment is performed on such a halide solid electrolyte synthesized by the above (A) such that the average particle diameter thereof becomes about 0.1 µm or more and 2 µm or less, for example.

The pulverization treatment only has to be performed such that the halide can be pulverized into small pieces having the desired particle size and may be performed by a dry method or a wet method using water or a solvent (e.g., ethanol, butyl acetate, or the like). For example, zirconia balls (e.g., balls with a diameter of 1 mm to 30 mm) and the halide solid electrolyte obtained in the above (A) are placed in a ball mill container, and the halide solid electrolyte is pulverized for 3 to 40 hours, for example. As the ball mill container, for example, a container made of polyethylene, a container lined with a fluorine resin or zirconia, etc., can be used.

The pulverization treatment in the above (B) may include, for example, mechanochemical treatment. Here, the mechanochemical treatment is performed in order to introduce distorted crystals or an amorphous structure to the crystals of the halide solid electrolyte. Distorted crystals or an amorphous structure are mainly introduced into the surface layers of the particles of the halide solid electrolyte. The specific means for this may be the same as in the pulverization treatment described above, and, for example, a ball mill is used. However, the pulverization conditions may be strengthened or the time may be extended. A device, a medium, etc., used for the mechanochemical treatment may be the same as in the pulverization treatment, and in general, pulverization and the mechanochemical treatment proceed at the same time. As an example, in the case of a dry method, a container lined with zirconia is used, zirconia balls with a volume ratio of 10% to 60% are placed therein, and mechanochemical milling is performed along with pulverization. The diameter of the zirconia balls is not particularly limited and balls with any size can be used. Normally, as described above, commercially available balls with a diameter of 1 mm to 30 mm are used, but balls having a smaller diameter than these balls may be used, or balls having a larger diameter than these balls may be used. The diameter of the balls to be used may be selected as desired according to a target particle size or degree of amorphization. In addition, an appropriate amount of an additive that does not adversely affect the characteristics of the halide solid electrolyte, such as ethanol, may be added in order to suppress the adhesion of the halide solid electrolyte to the zirconia balls or the inner wall of the zirconia container. The additive is preferably an additive that can be dried and removed later.

The introduction of the amorphous structure into the halide solid electrolyte can be confirmed by an X-ray diffraction pattern obtained by X-ray diffraction measurement. The X-ray diffraction pattern can be measured by the θ-2θ method using Cu-Kα rays (wavelengths: 1.5405 Å and 1.5444 Å) as X-ray sources. Specifically, this introduction can be confirmed by the fact that the peak of an X-ray diffraction pattern of the halide solid electrolyte after the pulverization treatment widens compared with the peak of an X-ray diffraction pattern of the halide solid electrolyte before the pulverization treatment is performed. The fact that the peak widens means that the peak is broad and the full width at half maximum widens.

The introduction of distorted crystals into the halide solid electrolyte, that is, the presence of disturbed crystalline regions, can be observed by a transmission electron microscope (TEM) as images of highly regular regions of a lattice image and disturbed regions of the lattice image.

In addition, changes in deformability due to amorphization can be evaluated by evaluation methods such as Micro-Vickers.

As described above, the production method according to the second embodiment includes the pulverization treatment, and thus the halide solid electrolyte obtained by the production method according to the second embodiment includes, for example, an amorphous phase. Owing to this configuration, the amorphized part of the halide solid electrolyte becomes even softer and has excellent deformability. Therefore, with a compacted powder of the halide solid electrolyte, a solid electrolyte layer having higher ionic conductivity and higher stability can be formed in any shape. Therefore, with the compacted powder of the halide solid electrolyte including the amorphous phase, a solid electrolyte layer of a battery having excellent characteristics and high reliability can be realized.

As a modification of the production method according to the second embodiment, when performing the pulverization treatment in the above (B), the halide solid electrolyte may be slurried, for coating film formation, simultaneously with the pulverization treatment.

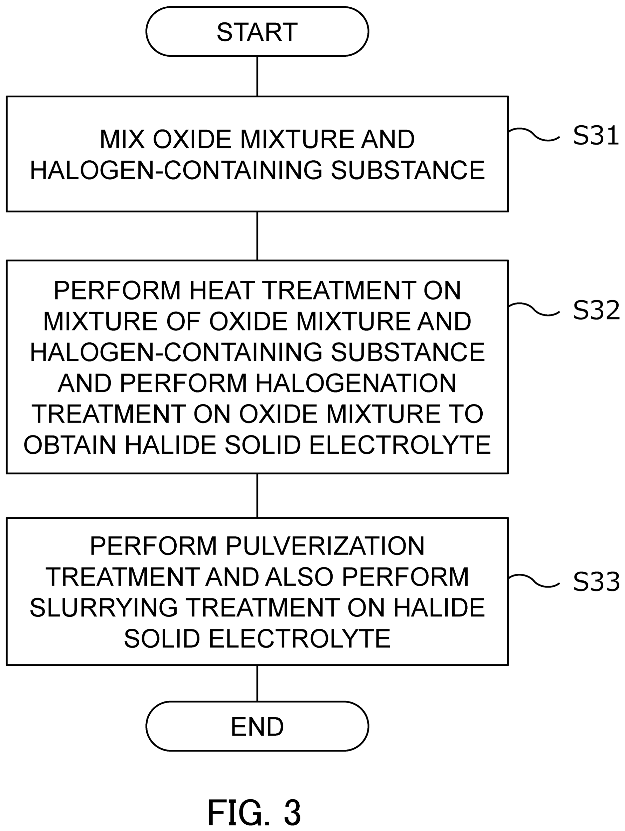

FIG. 3 is a flowchart showing a modification of the production method for a halide solid electrolyte according to the second embodiment. As for the modification of the production method according to the second embodiment as well, an example of a production method in which the above (B) is performed after the above (A-2) in the production method in which the above (A-1) and the above (A-2) are performed as the above (A) and which is an example of the production method described in the first embodiment, will be described here.

As shown in FIG. 3, first, an oxide mixture and a halogen-containing substance are mixed (S31). Next, halogenation treatment is performed on the oxide mixture by performing heat treatment on the obtained mixture including the oxide mixture and the halogen-containing substance (S32). Accordingly, a halide solid electrolyte containing Li, Ti, M, and X is obtained. Next, as a step corresponding to the above (B), on the halide solid electrolyte obtained in S32, pulverization treatment is performed and slurrying treatment is also performed (S33).

S31 and S32 are the same as S11 and S12 described in the first embodiment, respectively, and thus the detailed description thereof is omitted here.

In S33, the pulverization treatment is the same as the pulverization treatment in S23 described as an example of the production method of the second embodiment. In the modification of the production method of the second embodiment, the slurrying treatment is further performed. The slurrying treatment is performed, for example, by, simultaneously with the pulverization treatment, adding an organic binder, a plasticizer, or the like to the halide solid electrolyte in a state of being dispersed and included in an organic solvent such as tetralin. An example of the organic binder is a styrene butadiene block copolymer (SBS), for example. Examples of the plasticizer include dibutyl phthalate (DBP) and butyl benzyl phthalate (BBP).

Using the obtained slurry of the halide solid electrolyte, printing or coating can be performed. The thickness of a coating film may be, for example, 10 µm or more and 100 µm or less, and thus, for example, the slurry of the pulverized halide solid electrolyte including the amorphous part can be directly applied. As described above, in the pulverization treatment, a slurry of the halide solid electrolyte may be prepared by adding the organic binder, the plasticizer, or the like, and a coating film may be formed using this slurry. Accordingly, a coating film of the halide solid electrolyte having excellent characteristics can be formed. Such a coating film can be used, for example, for the manufacture of coated-type cells.

### [Third Embodiment]

Hereinafter, a production method for a halide solid electrolyte according to a third embodiment will be described.

In the production method according to the third embodiment, halogen gas is generated by performing heat treatment on the halogen-containing substance in the above (A) described in the first embodiment, and the halogen gas is brought into contact with the oxide mixture, thereby performing halogenation treatment on the oxide mixture. In the production method according to the third embodiment, the pulverization treatment in the above (B) described in the second embodiment may be performed after the above (A).

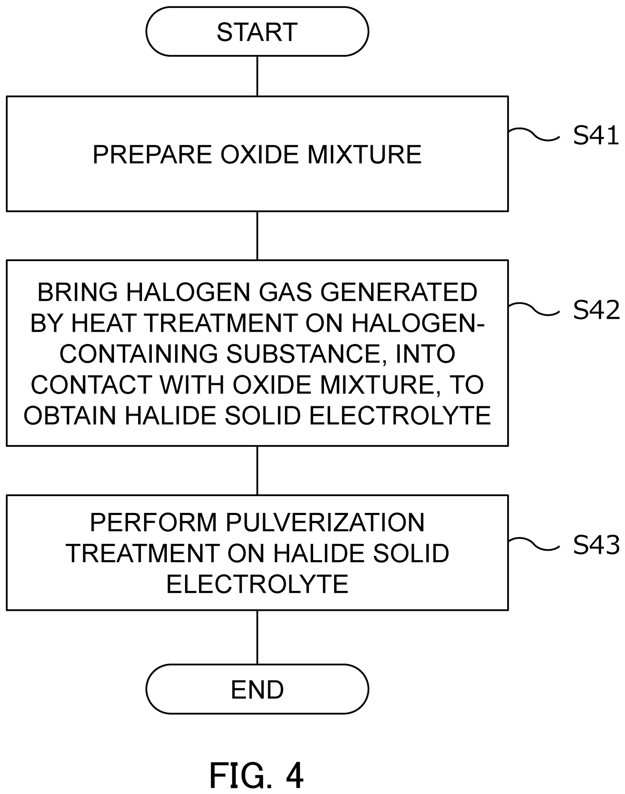

FIG. 4 is a flowchart showing an example of the production method for a halide solid electrolyte according to the third embodiment. As shown in FIG. 4, a composite oxide containing Li and Ti and an oxide raw material containing Li and M are mixed to prepare an oxide mixture (S41). Next, the oxide mixture and a halogen-containing substance are placed at a predetermined position, heat treatment is performed on the halogen-containing substance, and generated halogen gas is brought into contact with the oxide mixture (S42). Accordingly, halogenation treatment on the oxide mixture is performed. Then, as a step corresponding to the above (B), pulverization treatment may be performed on the halide solid electrolyte obtained in S42 (S43).

In the production method according to the third embodiment, the oxide mixture can be halogenated by the generated halogen gas without bringing the oxide mixture into direct contact with the halogen-containing substance. Therefore, even when a halogen-containing substance containing an inorganic component in addition to a halogen element (e.g., a substance that emits fluorine gas when heated, such as CuF₂) is used, there is no need to consider inorganic residues being incorporated into the halide solid electrolyte to be produced. Therefore, the range of halogen-containing substances that can be used can be expanded.

As a specific example, the oxide mixture is placed, for example, on a nickel mesh with fine openings, and the halogen-containing substance such as ammonium fluoride is placed under the nickel mesh. Thus, the oxide mixture and the halogen-containing substance are placed without contact with each other. In this state, by performing the heat treatment on the halogen-containing substance, halogen gas such as fluorine gas is generated, and this gas passes through the nickel mesh and comes into contact with the oxide mixture. Accordingly, the oxide mixture is converted into a halide. The oxide mixture and the halogen-containing substance are as described in the first embodiment. The heat treatment can be performed in atmospheric air, but heat treatment in a nitrogen atmosphere or reducing atmosphere is preferable in order to prevent the nickel mesh from oxidizing.

### [Fourth Embodiment]

Hereinafter, a fourth embodiment will be described. The matters described in the first embodiment, the second embodiment, and the third embodiment are omitted as appropriate.

A battery according to the fourth embodiment includes a positive electrode, an electrolyte layer, and a negative electrode. The electrolyte layer is provided between the positive electrode and the negative electrode.

At least one selected from the group consisting of the positive electrode, the electrolyte layer, and the negative electrode includes a halide solid electrolyte containing Li, Ti, Al, and F and further containing at least one selected from the group consisting of Nb and Ga. The halide solid electrolyte can be produced by the production method according to the first embodiment, the second embodiment, or the third embodiment.

Hereinafter, a halide solid electrolyte included in the battery according to the fourth embodiment, containing Li, Ti, Al, and F, and further containing at least one selected from the group consisting of Nb and Ga, is described as a halide solid electrolyte according to the fourth embodiment.

The halide solid electrolyte according to the fourth embodiment may consist substantially of Li, Ti, Al, F, Nb, and Ga or may consist only of Li, Ti, Al, F, Nb, and Ga as described as an example of the halide solid electrolyte that can be produced by the production method according to the first embodiment, the second embodiment, or the third embodiment in the first embodiment, the second embodiment, or the third embodiment. The halide solid electrolyte according to the fourth embodiment may be in particle form. In addition, the halide solid electrolyte according to the fourth embodiment may include an amorphous phase as described in the second embodiment.

Owing to including the halide solid electrolyte according to the fourth embodiment, the battery according to the fourth embodiment has excellent charge and discharge characteristics.

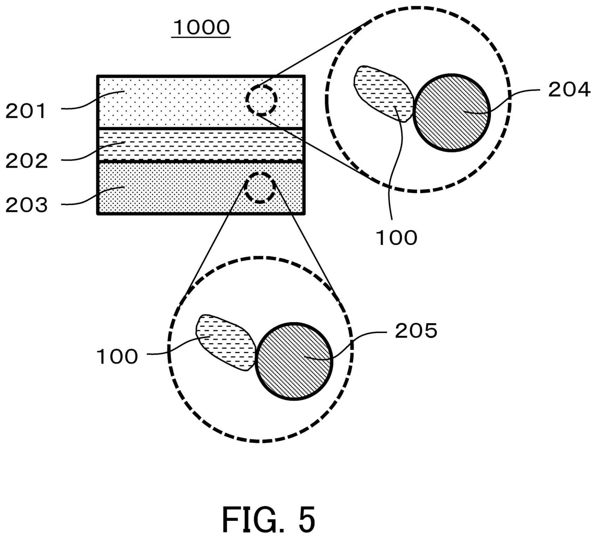

FIG. 5 illustrates a cross-sectional view of a battery 1000 according to the fourth embodiment.

The battery 1000 according to the fourth embodiment includes a positive electrode 201, an electrolyte layer 202, and a negative electrode 203. The electrolyte layer 202 is provided between the positive electrode 201 and the negative electrode 203.

The positive electrode 201 may include a positive electrode material including a halide electrolyte according to the fourth embodiment. The positive electrode 201 includes a positive electrode active material 204 and a solid electrolyte 100.

The electrolyte layer 202 includes an electrolyte material.

The negative electrode 203 includes a negative electrode active material 205 and the solid electrolyte 100.

The solid electrolyte 100 includes, for example, the halide solid electrolyte according to the fourth embodiment. The solid electrolyte 100 may be particles including the halide solid electrolyte according to the fourth embodiment as a main component. The particles including the halide solid electrolyte according to the fourth embodiment as a main component mean particles in which the component included in the largest amount in molar ratio is the halide solid electrolyte according to the fourth embodiment. The solid electrolyte 100 may be particles consisting of the halide solid electrolyte according to the fourth embodiment.

The positive electrode 201 includes a material capable of occluding and releasing metal ions (e.g., lithium ions). The material is, for example, the positive electrode active material 204.

Examples of the positive electrode active material 204 include a lithium-containing transition metal oxide, a transition metal fluoride, polyanion, a fluorinated polyanion material, a transition metal sulfide, a transition metal oxyfluoride, a transition metal oxysulfide, and a transition metal oxynitride. Examples of the lithium-containing transition metal oxide include Li(Ni, Co, Mn)O₂, Li(Ni, Co, Al)O₂, and LiCoO₂.

In the present disclosure, "(A, B, C)" means "at least one selected from the group consisting of A, B, and C".

The shape of the positive electrode active material 204 is not limited to a specific shape. The positive electrode active material 204 may be particles. The positive electrode active material 204 may have a median diameter of 0.1 µm or more and 100 µm or less. In the case where the positive electrode active material 204 has a median diameter of 0.1 µm or more, the positive electrode active material 204 and the solid electrolyte 100 can be well dispersed in the positive electrode 201. Accordingly, the charge and discharge characteristics of the battery 1000 are improved. In the case where the positive electrode active material 204 has a median diameter of 100 µm or less, the diffusion rate of lithium in the positive electrode active material 204 improves. Accordingly, the battery 1000 can operate at a high power.

The positive electrode active material 204 may have a median diameter larger than that of the solid electrolyte 100. Accordingly, the positive electrode active material 204 and the solid electrolyte 100 can be well dispersed in the positive electrode 201.

In order to improve the energy density and power output of the battery 1000, the ratio of the volume of the positive electrode active material 204 to the total of the volume of the positive electrode active material 204 and the volume of the solid electrolyte 100 in the positive electrode 201 may be 0.30 or more and 0.95 or less.

A coating layer may be formed on at least a part of the surface of the positive electrode active material 204. The coating layer can be formed on the surface of the positive electrode active material 204, for example, before mixing a conductive additive and a binder. Examples of a coating material included in the coating layer include a sulfide solid electrolyte, an oxide solid electrolyte, and a halide solid electrolyte. In the case where the solid electrolyte 100 includes a sulfide solid electrolyte, the coating material may include the halide solid electrolyte according to the fourth embodiment to suppress oxidative decomposition of the sulfide solid electrolyte. In the case where the solid electrolyte 100 includes the halide solid electrolyte according to the fourth embodiment, the coating material may include an oxide solid electrolyte to suppress oxidative decomposition of the solid electrolyte. As the oxide solid electrolyte, lithium niobate having excellent high-potential stability may be used. By suppressing oxidative decomposition, an increase in overvoltage of the battery 1000 can be suppressed.

As described above, in the case where the positive electrode 201 includes a positive electrode material including the halide solid electrolyte according to the fourth embodiment, the positive electrode material may include the halide solid electrolyte according to the fourth embodiment as the solid electrolyte 100 or may include a coating material that coats the positive electrode active material 204.

In order to improve the energy density and power output of the battery 1000, the positive electrode 201 may have a thickness of 10 µm or more and 500 µm or less.

The electrolyte layer 202 includes an electrolyte material. The electrolyte material is, for example, a solid electrolyte. The solid electrolyte may include the halide solid electrolyte according to the fourth embodiment. The electrolyte layer 202 may be a solid electrolyte layer.

The electrolyte layer 202 may include 50 mass% or more of the halide solid electrolyte according to the fourth embodiment. The electrolyte layer 202 may include 70 mass% or more of the halide solid electrolyte according to the fourth embodiment. The electrolyte layer 202 may include 90 mass% or more of the halide solid electrolyte according to the fourth embodiment. The electrolyte layer 202 may consist only of the halide solid electrolyte according to the fourth embodiment.

Hereinafter, the halide solid electrolyte according to the fourth embodiment is referred to as first solid electrolyte. A solid electrolyte different from the first solid electrolyte is referred to as second solid electrolyte.

The electrolyte layer 202 may include not only the first solid electrolyte but also the second solid electrolyte. In the electrolyte layer 202, the first solid electrolyte and the second solid electrolyte may be uniformly dispersed. A layer consisting of the first solid electrolyte and a layer consisting of the second solid electrolyte may be stacked together along the stacking direction of the battery 1000.

The battery according to the fourth embodiment may include the positive electrode 201, a second electrolyte layer, a first electrolyte layer, and the negative electrode 203 in this order. Here, the solid electrolyte included in the first electrolyte layer may have a lower reduction potential than the solid electrolyte included in the second electrolyte layer. Accordingly, the solid electrolyte included in the second electrolyte layer can be used without being reduced. As a result, the charge and discharge efficiency of the battery 1000 can be improved. For example, in the case where the second electrolyte layer includes the first solid electrolyte, the first electrolyte layer may include a sulfide solid electrolyte to suppress reductive decomposition of the solid electrolyte. Accordingly, the charge and discharge efficiency of the battery 1000 can be improved. The second electrolyte layer may include the first solid electrolyte. The first solid electrolyte has high oxidation resistance, so that a battery having excellent charge and discharge characteristics can be realized.

The electrolyte layer 202 may consist only of the second solid electrolyte.

The electrolyte layer 202 may have a thickness of 1 µm or more and 1000 µm or less. In the case where the electrolyte layer 202 has a thickness of 1 µm or more, the positive electrode 201 and the negative electrode 203 are less likely to short circuit. In the case where the electrolyte layer 202 has a thickness of 1000 µm or less, the battery 1000 can operate at a high power.

Examples of the second solid electrolyte include Li₂MgX₄, Li₂FeX₄, Li(Al, Ga, In)X₄, Li₃(Al, Ga, In)X₆, and Lil, where X is at least one selected from the group consisting of F, Cl, Br, and I.

In order to improve the energy density and power output of the battery 1000, the electrolyte layer 202 may have a thickness of 1 µm or more and 1000 µm or less.

The negative electrode 203 includes a material capable of occluding and releasing metal ions (e.g., lithium ions). The material is, for example, the negative electrode active material 205.

Examples of the negative electrode active material 205 include a metal material, a carbon material, an oxide, a nitride, a tin compound, and a silicon compound. The metal material may be an elemental metal or an alloy. Examples of the metal material include lithium metal and a lithium alloy. Examples of the carbon material include a natural graphite, a coke, a semi-graphitized carbon, a carbon fiber, a spherical carbon, an artificial graphite, and an amorphous carbon. From the viewpoint of capacity density, preferred examples of the negative electrode active material include silicon (i.e., Si), tin (i.e., Sn), a silicon compound, and a tin compound.

The negative electrode active material 205 may be selected in consideration of the reduction resistance of the solid electrolyte material included in the negative electrode 203. For example, in the case where the negative electrode 203 includes the first solid electrolyte, the negative electrode active material 205 may be a material capable of occluding and releasing lithium ions at 0.27 V or more with respect to lithium. Examples of such a negative electrode active material include a titanium oxide, indium metal, and a lithium alloy. Examples of the titanium oxide include Li₄Ti₅O₁₂, LiTi₂O₄, and TiO₂. By using the above negative electrode active material, reductive decomposition of the first solid electrolyte included in the negative electrode 203 can be suppressed. As a result, the charge and discharge efficiency of the battery 1000 can be improved.

The shape of the negative electrode active material 205 is not limited to a specific shape. The negative electrode active material 205 may be particles. The negative electrode active material 205 may have a median diameter of 0.1 µm or more and 100 µm or less. In the case where the negative electrode active material 205 has a median diameter of 0.1 µm or more, the negative electrode active material 205 and the solid electrolyte 100 can be well dispersed in the negative electrode 203. Accordingly, the charge and discharge characteristics of the battery 1000 are improved. In the case where the negative electrode active material 205 has a median diameter of 100 µm or less, the diffusion rate of lithium in the negative electrode active material 205 improves. Accordingly, the battery 1000 can operate at a high power.

The negative electrode active material 205 may have a median diameter larger than that of the solid electrolyte 100. Accordingly, the negative electrode active material 205 and the solid electrolyte 100 can be well dispersed in the negative electrode 203.

In order to improve the energy density and power output of the battery 1000, the ratio of the volume of the negative electrode active material 205 to the total of the volume of the negative electrode active material 205 and the volume of the solid electrolyte 100 in the negative electrode 203 may be 0.30 or more and 0.95 or less.

In order to improve the energy density and power output of the battery 1000, the negative electrode 203 may have a thickness of 10 µm or more and 500 µm or less.

At least one selected from the group consisting of the positive electrode 201, the electrolyte layer 202, and the negative electrode 203 may include the second solid electrolyte for the purpose of increasing ionic conductivity, chemical stability, and electrochemical stability.

The second solid electrolyte may be a sulfide solid electrolyte.

Examples of the sulfide solid electrolyte include Li₂S-P₂S₅, Li₂S-SiS₂, Li₂S-B₂S₃, Li₂S-GeS₂, Li_{3.25}Ge_{0.25}P_{0.75}S₄, and Li₁₀GeP₂S₁₂.

In the case where the electrolyte layer 202 includes the first solid electrolyte, the negative electrode 203 may include a sulfide solid electrolyte to suppress reductive decomposition of the solid electrolyte. By covering the negative electrode active material with the sulfide solid electrolyte which is electrochemically stable, contact of the first solid electrolyte with the negative electrode active material can be suppressed. As a result, the internal resistance of the battery 1000 can be reduced.

The second solid electrolyte may be an oxide solid electrolyte.

Examples of the oxide solid electrolyte include:
(i) a NASICON solid electrolyte such as LiTi₂(PO₄)₃ and element-substituted substances thereof;
(ii) a perovskite solid electrolyte such as (LaLi)TiO₃;
(iii) a LISICON solid electrolyte such as Li₁₄ZnGe₄O₁₆, Li₄SiO₄, and LiGeO₄ and element-substituted substances thereof;
(iv) a garnet solid electrolyte such as Li₇La₃Zr₂O₁₂ and element-substituted substances thereof; and
(v) Li₃PO₄ and N-substituted substances thereof.

As described above, the second solid electrolyte may be a halide solid electrolyte.

Examples of the halide solid electrolyte include Li₂MgX₄, Li₂FeX₄, Li(Al, Ga, In)X₄, Li₃(Al, Ga, In)X₆, and Lil, where X is at least one selected from the group consisting of F, Cl, Br, and I.

Another example of the halide solid electrolyte is a compound represented by LiₐMe_{b}Y_{c}Z₆, where a + mb + 3c = 6 and c > 0 are satisfied. Me is at least one selected from the group consisting of metal elements other than Li and Y and metalloid elements. Z is at least one selected from the group consisting of F, Cl, Br, and I. The symbol m represents the valence of Me. The "metalloid elements" are B, Si, Ge, As, Sb, and Te. The "metal elements" are: all the elements included in Groups 1 to 12 of the periodic table (excluding hydrogen); and all the elements included in Groups 13 to 16 of the periodic table (excluding B, Si, Ge, As, Sb, Te, C, N, P, O, S, and Se).

In order to improve the ionic conductivity of the halide solid electrolyte, Me may be at least one selected from the group consisting of Mg, Ca, Sr, Ba, Zn, Sc, Al, Ga, Bi, Zr, Hf, Ti, Sn, Ta, and Nb.

The halide solid electrolyte may be Li₃YCl₆ or Li₃YBr₆.

The second solid electrolyte may be an organic polymer solid electrolyte.

An example of the organic polymer solid electrolyte is a compound of a polymer compound with a lithium salt.

The polymer compound may have an ethylene oxide structure. A polymer compound having an ethylene oxide structure can contain a large amount of a lithium salt, and accordingly can further increase the ionic conductivity.

Examples of the lithium salt include LiPF₆, LiBF₄, LiSbF₆, LiAsF₆, LiSO₃F₃, LiN(SO₂CF₃)₂, LiN(SO₂C₂F₅)₂, LiN(SO₂CF₃)(SO₂C₄F₉), and LiC(SO₂CF₃)₃. One lithium salt selected from these may be used alone. Alternatively, a mixture of two or more lithium salts selected from these may be used.

In order to facilitate transfer of lithium ions and thereby improve the output characteristics of the battery, at least one selected from the group consisting of the positive electrode 201, the electrolyte layer 202, and the negative electrode 203 may include a nonaqueous electrolyte solution, a gel electrolyte, or an ionic liquid.

The nonaqueous electrolyte solution contains a nonaqueous solvent and a lithium salt dissolved in the nonaqueous solvent.

Examples of the nonaqueous solvent include a cyclic carbonate solvent, a linear carbonate solvent, a cyclic ether solvent, a linear ether solvent, a cyclic ester solvent, a linear ester solvent, and a fluorinated solvent. Examples of the cyclic carbonate solvent include ethylene carbonate, propylene carbonate, and butylene carbonate. Examples of the linear carbonate solvent include dimethyl carbonate, ethyl methyl carbonate, and diethyl carbonate. Examples of the cyclic ether solvent include tetrahydrofuran, 1,4-dioxane, and 1,3-dioxolane. Examples of the linear ether solvent include 1,2-dimethoxyethane and 1,2-diethoxyethane. Examples of the cyclic ester solvent include γ-butyrolactone. Examples of the linear ester solvent include methyl acetate. Examples of the fluorinated solvent include fluoroethylene carbonate, methyl fluoropropionate, fluorobenzene, fluoroethyl methyl carbonate, and fluorodimethylene carbonate. One nonaqueous solvent selected from these may be used alone. Alternatively, a combination of two or more nonaqueous solvents selected from these may be used.

Examples of the lithium salt include LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. One lithium salt selected from these may be used alone. Alternatively, a mixture of two or more lithium salts selected from these may be used. The concentration of the lithium salt falls, for example, within a range from 0.5 mol/L to 2 mol/L.

As the gel electrolyte, a polymer material impregnated with a nonaqueous electrolyte solution can be used. Examples of the polymer material include polyethylene oxide, polyacrylonitrile, polyvinylidene fluoride, polymethyl methacrylate, and a polymer having an ethylene oxide bond.

Examples of cations contained in the ionic liquid include:
(i) aliphatic linear quaternary salts such as tetraalkylammoniums and tetraalkylphosphoniums;
(ii) aliphatic cyclic ammoniums such as pyrrolidiniums, morpholiniums, imidazoliniums, tetrahydropyrimidiniums, piperaziniums, and piperidiniums; and
(iii) nitrogen-containing heterocyclic aromatic cations such as pyridiniums and imidazoliums.

Examples of anions contained in the ionic liquid include PF₆⁻, BF₄⁻, SbF₆⁻, AsF₆⁻, SO₃CF₃⁻, N(SO₂CF₃)₂⁻, N(SO₂C₂F₅)₂⁻, N(SO₂CF₃)(SO₂C₄F₉)⁻, and C(SO₂CF₃)₃⁻.

The ionic liquid may contain a lithium salt.

In order to improve the adhesion between particles, at least one selected from the group consisting of the positive electrode 201, the electrolyte layer 202, and the negative electrode 203 may contain a binder.

Examples of the binder include polyvinylidene fluoride, polytetrafluoroethylene, polyethylene, polypropylene, aramid resin, polyamide, polyimide, polyamide-imide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polyethersulfone, hexafluoropolypropylene, styrenebutadiene rubber, and carboxymethylcellulose. A copolymer can also be used as the binder. Examples of such a binder include a copolymer of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene. A mixture of two or more materials selected from these may be used as the binder.

At least one of the positive electrode 201 and the negative electrode 203 may contain a conductive additive in order to improve electronic conductivity.

Examples of the conductive additive include:
(i) graphites such as a natural graphite and an artificial graphite;
(ii) carbon blacks such as acetylene black and ketjen black;
(iii) conductive fibers such as a carbon fiber and metal fiber;
(iv) fluorinated carbon;
(v) metal powders such as an aluminum powder;
(vi) conductive whiskers such as a zinc oxide whisker and a potassium titanate whisker;
(vii) a conductive metal oxide such as titanium oxide; and
(viii) a conductive polymer compound such as polyaniline compound, polypyrrole compound, and polythiophene compound. To reduce the cost, the conductive additive in (i) or (ii) above may be used.

Instead of the electrolyte layer, a separator impregnated with an electrolyte solution may be used, or a casing in which a positive electrode, a separator portion, and a negative electrode are housed may be filled with an electrolyte solution. The electrolyte solution may be, for example, the nonaqueous electrolyte solution described above. Examples of the shape of the battery according to the fourth embodiment include a coin type, a cylindrical type, a prismatic type, a sheet type, a button type, a flat type, and a stack type.

The battery according to the fourth embodiment may be manufactured, for example, by preparing a material for forming a positive electrode, a material for forming an electrolyte layer, and a material for forming a negative electrode, and producing by a known method a stack in which the positive electrode, the electrolyte layer, and the negative electrode are disposed in this order.

### [Other Embodiments]

### (Additional Notes)

The following techniques are disclosed by the description of the above embodiments.

### (Technique 1)

A production method for a halide solid electrolyte, including
(A) performing halogenation treatment on an oxide mixture including a composite oxide containing Li and Ti and an oxide raw material containing Li and M, to obtain a halide solid electrolyte containing Li, Ti, M, and X, wherein
   the M is at least one element selected from the group consisting of metal elements (excluding Li and Ti) and metalloid elements, and
   the X is at least one selected from the group consisting of F, Cl, Br, and I.

A titanium halide (TiX₄) is a relatively unstable substance that easily evaporates and also has deliquescence properties, etc. According to the production method of Technique 1, the composite oxide containing Li and Ti can be used as a Ti source. Therefore, according to the production method of Technique 1, it is not necessary to use the above unstable titanium halide in the synthesis of a halide solid electrolyte containing Ti, and it is also less likely to generate a titanium halide in the synthesis process. In a conventional production method, normally, a titanium halide is used as a Ti source in order to synthesize a halide solid electrolyte containing Ti. Therefore, due to the instability of the titanium halide, in the synthesis of a halide solid electrolyte containing Ti, compositional variations (i.e., compositional deviation) and alterations (e.g., incorporation of moisture, etc.) are likely to occur, so that the characteristics of the halide solid electrolyte are likely to vary. On the other hand, according to the production method of Technique 1, such compositional variations, etc., are less likely to occur, and a Ti-containing halide solid electrolyte having excellent characteristics such as ionic conductivity can be synthesized stably with good reproducibility. That is, with the production method of Technique 1, a halide solid electrolyte having a target composition can be stably synthesized.

### (Technique 2)

The production method for a halide solid electrolyte according to Technique 1, wherein
the halide solid electrolyte includes a first crystal phase represented by the following composition formula (1) and a second crystal phase represented by the following composition formula (2),

composition formula (1): Li₂TiX₆, and

composition formula (2): Li₃MX₆.

According to the production method of Technique 2, for example, Li₂TiO₃, which is stable in atmospheric environments, can be used as the composite oxide containing Li and Ti. Therefore, TiO₂ does not have to be used as a Ti source. Thus, generation of titanium halide is suppressed during the process of conversion of the oxide mixture into the halide. Owing to the above, a halide solid electrolyte having good characteristics can be synthesized stably with good reproducibility in an atmospheric environment. In addition, since generation of titanium halide is suppressed, the need for synthesis in a sealed jig (e.g., solid-phase synthesis in a planetary ball mill or a seal-type heat-resistant container) is eliminated. Therefore, synthesis with excellent productivity is enabled.

### (Technique 3)

The production method for a halide solid electrolyte according to Technique 1 or 2, wherein
the oxide raw material includes an oxide of Li and an oxide of M.

With the production method of Technique 3, a halide solid electrolyte having a target composition can be more stably synthesized.

### (Technique 4)

The production method for a halide solid electrolyte according to any one of Techniques 1 to 3, wherein
the M includes Al.

With the production method of Technique 4, a halide solid electrolyte having high ionic conductivity can be obtained.

### (Technique 5)

The production method for a halide solid electrolyte according to any one of Techniques 1 to 4, wherein
the X includes F.

With the production method of Technique 5, a halide solid electrolyte having excellent stability (e.g., excellent electrochemical stability and heat resistance) and having high ionic conductivity can be obtained.

### (Technique 6)

The production method for a halide solid electrolyte according to any one of Techniques 1 to 5, wherein
the oxide mixture is in particle form.

According to the production method of Technique 6, it becomes easier for halogenation (i.e., substitution of halogen and oxygen elements) from the particle surface of the oxide mixture and the solid-phase reaction in the oxide mixture to occur simultaneously. Therefore, a halide can be synthesized in a short time while reducing reaction residues such as oxides. Thus, a homogeneous solid electrolyte having excellent characteristics can be obtained. In addition, the particulate oxide mixture has good reactivity (i.e., halogenation properties), and thus excellent productivity can also be achieved.

### (Technique 7)

The production method for a halide solid electrolyte according to any one of Techniques 1 to 6, wherein
the oxide mixture is substantially free of TiO₂.

According to the production method of Technique 7, in the process of conversion from the oxide mixture to a halide, for example, titanium halides such as titanium tetrafluoride (TiF₄) are less likely to be generated. Therefore, compositional variations and alterations are suppressed, and the desired halide solid electrolyte is obtained.

### (Technique 8)

The production method for a halide solid electrolyte according to any one of Techniques 1 to 7, wherein
in the (A), the halogenation treatment on the oxide mixture is performed by performing heat treatment on a halogen-containing substance having thermal decomposition properties.

According to the production method of Technique 8, halogenation of the oxide mixture and the solid-phase reaction can be caused to occur simultaneously. Therefore, a homogeneous solid electrolyte having excellent characteristics can be obtained in a short time while reducing reaction residues such as oxides. In addition, since the halogenation treatment is performed by performing the heat treatment on the halogen-containing substance having thermal decomposition properties, the reactivity (halogenation properties) of the oxide mixture is good, and the productivity is also excellent. Furthermore, for example, the temperatures of the halogenation reaction and the solid-phase reaction of the oxide mixture and the progress of these reactions can also be controlled according to the thermal decomposition temperature of the halogen-containing substance to be selected. Thus, the desired halide solid electrolyte can be obtained.

### (Technique 9)

The production method for a halide solid electrolyte according to Technique 8, wherein
the halogen-containing substance is in particle form.

According to the production method of Technique 9, the halogen-containing substance easily becomes thermally decomposed. Therefore, according to the production method of Technique 10, the oxide mixture can be efficiently halogenated, and the halogen-containing substance is less likely to be caused to remain in the finally obtained halide solid electrolyte. In addition, precise control of the halogen amount is enabled. Thus, the synthesis of the desired halide solid electrolyte is enabled. Moreover, the halogen-containing substance can be used in an amount required for the halogenation of the oxide mixture, so that excess halogen gas emission can be suppressed. Therefore, the environmental impact is reduced and the influence on corrosion of a furnace material, etc., is also reduced.

### (Technique 10)

The production method for a halide solid electrolyte according to Technique 8 or 9, wherein
the (A) includes
(A-1) mixing the oxide mixture and the halogen-containing substance, and
(A-2) performing the halogenation treatment on the oxide mixture by performing heat treatment on a mixture including the oxide mixture and the halogen-containing substance obtained in the above (A-1).

According to the production method of Technique 10, the heat treatment for the halogenation treatment can be performed on a homogeneous mixture obtained by mixing the oxide mixture and the halogen-containing substance. In addition, the contact area between the oxide mixture and the halogen-containing substance can be increased. Therefore, according to the production method of Technique 10, the halogenation of the oxide mixture can be uniformly promoted. Thus, a homogeneous halide solid electrolyte having excellent characteristics can be obtained.

### (Technique 11)

The production method for a halide solid electrolyte according to Technique 8 or 9, wherein
in the (A), a halogen gas is generated by performing heat treatment on the halogen-containing substance, and the halogen gas is brought into contact with the oxide mixture, thereby performing the halogenation treatment on the oxide mixture.

According to the production method of Technique 11, the oxide mixture can be halogenated by the generated halogen gas without bringing the oxide mixture into direct contact with the halogen-containing substance. Therefore, even when a halogen-containing substance containing an inorganic component in addition to a halogen element is used, there is no need to consider inorganic residues being incorporated into the halide solid electrolyte to be produced. Therefore, the range of halogen-containing substances that can be used can be expanded.

### (Technique 12)

The production method for a halide solid electrolyte according to any one of Techniques 8 to 11, wherein
the halogen-containing substance includes an ammonium salt.

The thermal decomposition of the ammonium salt starts at a relatively low temperature (e.g., about 150°C). Therefore, the ammonium salt is less likely to remain as an unnecessary inorganic component in the finally obtained halide solid electrolyte and can be thermally decomposed at a low temperature to halogenate the oxide mixture. Therefore, according to the production method of Technique 12, an unnecessary inorganic component derived from the halogen-containing substance can be inhibited from remaining in the finally obtained halide solid electrolyte. Furthermore, the energy for synthesis is saved, and the heating and cooling times are reduced, so that the productivity is also improved. Moreover, since synthesis at a low temperature is possible, the durability of the furnace material is improved, and the running cost and replacement frequency of a synthetic member are also significantly reduced. In addition, a conventional method for synthesizing a halide solid electrolyte by a solid-phase reaction using a halide raw material requires heat treatment at about 500°C to 600°C, for example.

### (Technique 13)

The production method for a halide solid electrolyte according to Technique 12, wherein
the ammonium salt includes NH₄F.

NH₄F is a highly decomposable fluorine source and can act effectively on the halogenation of the oxide mixture. Therefore, according to the production method of Technique 13, NH₄F can halogenate the oxide mixture without remaining in the solid electrolyte, while being thermally decomposed at a low temperature (e.g., about 150°C) and a high decomposition rate.

### (Technique 14)

The production method for a halide solid electrolyte according to any one of Techniques 8 to 13, wherein
the halogen-containing substance includes a resin.

According to the production method of Technique 14, the halogen-containing substance can halogenate the oxide mixture while being thermally decomposed at a relatively high temperature (e.g., about 450°C or higher and 600°C or lower). Therefore, the production method of Technique 14 is suitable for the case where it is desired to carry out the halogenation and the solid-phase reaction at a relatively high temperature (e.g., about 450°C or higher and 600°C or lower).

### (Technique 15)

The production method for a halide solid electrolyte according to Technique 14, wherein
the resin includes a fluorine resin.

The fluorine resin such as PTFE can halogenate the oxide mixture while being thermally decomposed at a relatively high temperature (e.g., about 450°C or higher and 600°C or lower). Therefore, the production method of Technique 15 is suitable for the case where it is desired to carry out the halogenation and the solid-phase reaction at a relatively high temperature (e.g., about 450°C or higher and 600°C or lower).

### (Technique 16)

The production method for a halide solid electrolyte according to any one of Techniques 8 to 11, wherein
the halogen-containing substance includes a substance from which inorganic components generated by thermal decomposition during the heat treatment in the (A), other than halogen elements, are substantially not incorporated into the halide solid electrolyte.

For the halogen-containing substance, it is required that while the halogen element generated due to thermal decomposition by the heat treatment in the above (A) is replacing the oxygen element of the oxide mixture, the other components are not incorporated as inorganic residues into the finally obtained halide solid electrolyte. By using, as the halogen-containing substance, a substance from which the inorganic components generated by thermal decomposition during the heat treatment, other than halogen elements, are substantially not incorporated into the finally obtained halide solid electrolyte, the incorporation of inorganic residues into the halide solid electrolyte can be suppressed, and the desired halide solid electrolyte can be obtained. Examples of the halogen-containing substance from which the inorganic components generated by thermal decomposition during the heat treatment, other than halogen elements, are substantially not incorporated into the finally obtained halide solid electrolyte, include substances from which inorganic components generated by thermal decomposition during heat treatment, other than halogen elements, are converted into gas and discharged.

### (Technique 17)

The production method for a halide solid electrolyte according to any one of Techniques 8 to 16, wherein
the halogen-containing substance includes a plurality of types of halogen-containing compounds.

According to the production method of Technique 17, for example, both the ammonium salt and the fluorine resin can be used as the halogen-containing substance. Accordingly, the temperature range where the halogen-containing substance acts as a halogen source can be controlled to be wide. Thus, according to the production method of Technique 17, the conversion of the oxide mixture into the halide and the solid-phase reaction temperature can be controlled over a wide range. Therefore, it becomes easy to obtain the desired halide solid electrolyte.

### (Technique 18)

The production method for a halide solid electrolyte according to any one of Techniques 1 to 17, wherein
in the (A), the halogenation treatment on the oxide mixture is performed at a temperature of 150°C or higher.

According to the production method of Technique 18, the oxide mixture can be sufficiently halogenated. As the atmosphere for the halogenation treatment, for example, any atmosphere suitable for a halogen-containing substance to be used, such as atmospheric air, a nitrogen atmosphere, and a reducing atmosphere, can be selected as appropriate.

### (Technique 19)

The production method for a halide solid electrolyte according to any one of Techniques 1 to 18, further including (B) performing pulverization treatment on the halide solid electrolyte obtained in the (A), after the (A).

With the production method of Technique 19, a halide solid electrolyte having excellent ionic conductivity and reliability can be obtained with a particle size suitable for the application. In addition, at least a part of the halide solid electrolyte can be amorphized, so that ionic conductivity can be improved and the softness of the particles of the halide solid electrolyte can be improved. By improving the softness of the particles of the halide solid electrolyte, the density of a compacted powder of the halide solid electrolyte can be improved. Therefore, with the halide solid electrolyte obtained by the production method of Technique 19, a dense compacted powder having high ionic conductivity can be formed.

### (Technique 20)

A halide solid electrolyte containing:
Li;
Ti;
Al;
F; and
at least one selected from the group consisting of Nb and Ga.

Owing to this configuration, a homogeneous halide solid electrolyte having excellent ionic conductivity is obtained.

### (Technique 21)

The halide solid electrolyte according to Technique 20, being substantially free of TiF₄.

Owing to this configuration, temporal changes in characteristics, mechanical properties, etc., of the halide solid electrolyte caused by evaporation and deliquescence of TiF₄ can be suppressed, so that a halide solid electrolyte having excellent characteristics and reliability can be realized. In the case where the oxide mixture, which is a raw material of the halide solid electrolyte, contains a trace amount of titanium oxide (TiO₂), TiF₄ may be generated in the halogenation process. However, even in this case, by performing the halogenation treatment in an open atmosphere, TiF₄ can be caused to evaporate and disappear. Therefore, a halide solid electrolyte that is substantially free of TiF₄ and has excellent characteristics and reliability can be obtained.

### (Technique 22)

The halide solid electrolyte according to Technique 20 or 21, wherein
the halide solid electrolyte is in particle form.

The halide solid electrolyte has relatively soft properties. Therefore, according to this configuration, a relatively soft particulate solid electrolyte can be realized. Therefore, a compacted powder of the halide solid electrolyte of Technique 22 can have high ionic conductivity, can have excellent stability, and can take any shape. In addition, the compacted powder of the halide solid electrolyte of Technique 22 has excellent deformability since the compacted powder can take any shape. Therefore, with the compacted powder of the halide solid electrolyte of Technique 22, a solid electrolyte layer of a battery having excellent characteristics and high reliability can be realized. The size and shape of the particles can be selected as appropriate according to the application.

### (Technique 23)

The halide solid electrolyte according to any one of Techniques 20 to 22, wherein
the halide solid electrolyte includes an amorphous phase.

Owing to this configuration, the amorphized part of the halide solid electrolyte becomes even softer and has excellent deformability. Therefore, with a compacted powder of the halide solid electrolyte, a solid electrolyte layer having higher ionic conductivity and higher stability can be formed in any shape. Therefore, with the compacted powder of the halide solid electrolyte of Technique 23, a solid electrolyte layer of a battery having excellent characteristics and high reliability can be realized.

### (Technique 24)

The halide solid electrolyte according to any one of Techniques 20 to 23, wherein
at least one selected from the group consisting of the following (1), (2), and (3) is satisfied in an X-ray diffraction pattern obtained by X-ray diffraction measurement of the halide solid electrolyte using Cu-Kα rays,
(1) there is no peak derived from TiF₄,
(2) there is no peak derived from LiF, and
(3) there is no peak derived from AlF₃.

Owing to this configuration, a halide solid electrolyte having excellent characteristics and reliability can be obtained.

### (Technique 25)

A positive electrode material including the halide solid electrolyte according to any one of Techniques 20 to 24.

With the positive electrode material according to Technique 25, a battery having excellent charge and discharge characteristics can be realized.

### (Technique 26)

A battery including a positive electrode including the positive electrode material according to Technique 25.

Owing to this configuration, a battery having excellent charge and discharge characteristics can be provided.

### (Technique 27)

A battery including:
a positive electrode;
a negative electrode; and
an electrolyte layer provided between the positive electrode and the negative electrode, wherein
at least one selected from the group consisting of the positive electrode, the negative electrode, and the electrolyte layer includes the halide solid electrolyte according to any one of Techniques 20 to 24.

Owing to this configuration, a battery having excellent charge and discharge characteristics can be provided.

Although the production method for a halide solid electrolyte and the halide solid electrolyte according to the present disclosure have been described above based on the embodiments, the present disclosure is not limited to these embodiments. The embodiments including various modifications conceived of by a person skilled in the art, and other embodiments configured by combining some of components of the embodiments are also included in the scope of the present disclosure as long as the embodiments do not depart from the gist of the present disclosure.

In the above-described embodiments, various changes, replacements, additions, omissions, or the like can be made within the scope of the claims or the scope equivalent thereto.

### EXAMPLES

Hereinafter, the present disclosure will be described in more detail with reference to an example.

### <Synthesis of Halide Solid Electrolyte>

### (Example 1)

As starting raw materials, Li₂TiO₃ powder (average particle diameter: about 0.8 µm) which is a composite oxide, Li₂O powder (average particle diameter: 1.5 µm) and Al₂O₃ powder (average particle diameter: 0.4 µm) which are an oxide raw material, NH₄F powder (average particle diameter: about 35 µm) which is a halogen-containing substance, and Nb₂O₅ powder (average particle diameter: about 0.8 µm) and Ga₂O₃ powder (average particle diameter: about 0.6 µm) as additives were prepared.

Subsequently, the Li₂TiO₃ powder, the Li₂O powder, and the Al₂O₃ powder were weighed such that x = 0.25 when a halide solid electrolyte after synthesis is represented by a composition formula (3): xLi₂TiX₆-(1-x)Li₃MX₆. In this example, in the composition formula (3), X is F, and M is Al. In addition, as for the additives, the Nb₂O₅ powder and the Ga₂O₃ powder were weighed such that NbF₅ and GaF₃ were 0.4 mol% and 0.02 mol%, respectively, with respect to [0.25Li₂TiF₆-0.75Li₃AlF₆]. The NH₄F powder was added in an amount required for fluorination of the raw materials. Specifically, an amount of NH₄F that fluorinates all raw materials in the reaction formula was used. The weighing of these starting raw materials was performed in an air atmosphere.

The weighed starting raw materials were mixed with a pestle for about 10 minutes using an alumina mortar such that these materials were uniform (step corresponding to the above (A-1)). Accordingly, a mixture including the oxide mixture, the halogen-containing substance, and the additives was obtained. The mixing of the starting raw materials was performed in normal atmospheric air as at the time of weighing.

Next, heat treatment was performed on the mixture including the oxide mixture, the halogen-containing substance, and the additives (step corresponding to the above (A-2)). As a sagger, a high-purity (SSA-H) alumina crucible (diameter φ: 36 mm, height: 40 mm) was used, and about 3 g of the mixture was placed in the crucible. A spacer (thickness: 0.5 mm) was placed at the outer edge of the upper surface of the sagger in order to provide a gap such that reactive gas (mainly ammonia) to be discharged during the heat treatment was allowed to easily escape, and an alumina plate-like lid was placed thereon to prevent foreign objects from falling. Next, the sagger having the lid placed as described above was placed at a center portion of a firing furnace, and heat treatment was performed. In the firing furnace, the sagger was placed on a support made of mullite and having a porosity of about 20% and a small heat capacity. A support having a length of 10 mm, a width of 10 mm, and a height of 10 mm was used, and three supports were placed under one sagger to float the sagger from the bottom of the furnace. Thus, heater (radiation) heat and an inert gas were allowed to circulate around to the bottom of the sagger. After the door of the furnace was closed and sealed, as the inert gas, nitrogen gas was caused to flow in at 1.5 L/min through an introduction port in the bottom of the furnace and was discharged through an exhaust port on the upper side of a ceiling, and the gas was continuously caused to flow until the heat treatment was completed. The temperature of the heat treatment was 300°C.

In this example, since the oxides were used as the starting raw materials, that is, no titanium halide was contained in the raw material, heat treatment could be performed in a manner similar to that of general oxide ceramics. For example, if heat treatment is performed on titanium fluoride without sealing as in this example, titanium fluoride will begin to evaporate around 50°C to 100°C and a large portion (about 70%) of titanium fluoride will disappear at 200°C. Therefore, a halide in normal solid-phase synthesis has large compositional variations. Therefore, using the Ti component as a composite oxide containing Ti is very effective for suppressing compositional variations from the viewpoint of evaporation and environmental stability.

On the halide solid electrolyte obtained by the above heat treatment, pulverization treatment was performed (step corresponding to the above (B)). In this example, dry pulverization treatment was performed. Specifically, zirconia balls (diameter: 15 mm) and the halide solid electrolyte obtained by the above heat treatment were placed in a ball mill (volume: 1 L) lined with zirconia, and the halide solid electrolyte was pulverized for 20 hours.

### (Comparative Example 1)

A halide solid electrolyte was synthesized in the same manner as for the solid electrolyte material of the example described in Patent Literature 1. That is, fluorides were used as the starting raw materials, and a halide solid electrolyte of Comparative Example 1 was produced by mechanochemical synthesis. Specifically, LiF, TiF₄, and AlF₃ were prepared to have a molar ratio of LiF:TiF₄:AlF₃ = 2.75:0.25:0.75. These materials were pulverized and mixed in a mortar. The obtained mixture was subjected to a milling process with a planetary ball mill at 500 rpm for 12 hours. Thus, the halide solid electrolyte of Comparative Example 1 was synthesized.

### <Evaluation of Halide Solid Electrolyte>

The crystal phase, the ionic conductivity, the electronic conductivity, the average particle diameter, and the BET specific surface area of the halide solid electrolyte of Example 1 synthesized as described above were evaluated. The crystal phase, the ionic conductivity, the average particle diameter, and the BET specific surface area were evaluated for both halide solid electrolytes after the heat treatment and before the pulverization treatment and after the pulverization treatment. In addition, the halide solid electrolyte of Comparative Example 1 was also evaluated for crystal phase. Moreover, analysis of trace components was also performed for the halide solid electrolyte of Example 1.

### (Crystal Phase)

The crystal phase was confirmed by powder X-ray diffraction measurement both after the heat treatment and before the pulverization treatment and after the pulverization treatment. An X-ray diffractometer (MiniFlex600, manufactured by Rigaku) was used for measurement. Cu-Kα rays (wavelengths: 1.5405 Å and 1.5444 Å) were used as X-ray sources.

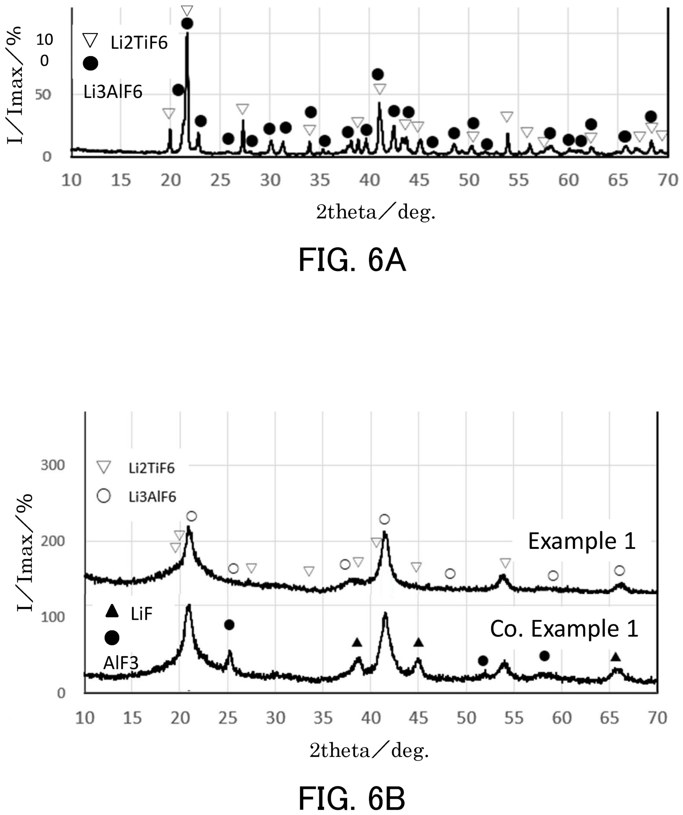

FIG. 6A is a graph showing an X-ray diffraction pattern of the halide solid electrolyte after the heat treatment and before the pulverization treatment in the production method of Example 1. FIG. 6B is a graph showing X-ray diffraction patterns of the halide solid electrolyte after the pulverization treatment obtained in Example 1 and the halide solid electrolyte obtained in Comparative Example 1. As shown in FIG. 6A, for the halide solid electrolyte synthesized in Example 1, Li₂TiF₆ corresponding to the first crystal phase and Li₃AlF₆ corresponding to the second crystal phase were confirmed. As shown in FIG. 6B, for the halide solid electrolyte after the pulverization treatment obtained in Example 1, compared with the halide solid electrolyte before the pulverization treatment, the crystallinity was reduced by the pulverization treatment, but no undesired precipitate phase was observed. On the other hand, as shown in FIG. 6B, for the halide solid electrolyte obtained in Comparative Example 1, compared with the halide solid electrolyte of Example 1, compositional variations were confirmed, and the presence of LiF and AlF₃ was also confirmed.

### (lonic Conductivity)

For the ionic conductivity, a powder of the halide solid electrolyte was placed in a mold having a diameter of 10 mm, and a compacted powder sample was obtained by applying a pressure of about 3 t/cm using a single-axis hydraulic press. The ionic conductivity was calculated from the area, the thickness, and the impedance characteristics at room temperature of the compacted powder sample. The impedance measurement was performed at room temperature with pressure applied. The impedance measurement was performed at a measurement frequency of 10 Hz to 10 MHz, a measurement voltage of 1 Vrms, and no DC bias. The deviation between the electrical lengths of a cable and a measurement jig was offset upon evaluation. For the halide solid electrolyte of Example 1, the ionic conductivity before the pulverization treatment was 1.1 µS/cm, and the ionic conductivity after the pulverization treatment was 6.1 µS/cm.

### (Electronic Conductivity)

The electronic conductivity was calculated from a DC voltage and current characteristics. The electronic conductivity of the halide solid electrolyte of Example 1 was < 1.0 × 10⁻⁹ µS/cm and was a value that could be determined to have no electron-conducting properties.

### (Average Particle Diameter)

The average particle diameter is the value of a median diameter D50 obtained from a volume particle size distribution measured by a laser diffraction scattering particle size distribution measuring device. Specifically, a powder of the halide solid electrolyte was dispersed in an aqueous solution of 0.01 wt% sodium hexametaphosphate with a homogenizer, and then, the particle size distribution of the halide solid electrolyte was measured by a laser diffraction scattering particle size distribution measuring device (trade name: MT3100II, manufactured by MicrotracBEL Corp.). The value of D50 (i.e., cumulative 50% particle diameter) of the measured particle size distribution was regarded as the average particle size. For the halide solid electrolyte of Example 1, the average particle diameter before the pulverization treatment was 0.83 µm, and the average particle diameter after the pulverization treatment was 0.61 µm.

### (BET Specific Surface Area)

The BET specific surface area was determined by the BET multipoint method using a device for the nitrogen gas adsorption method. For the halide solid electrolyte of Example 1, the BET specific surface area before the pulverization treatment was 2.86 m²/g, and the BET specific surface area after the pulverization treatment was 3.90 m²/g.

### (Analysis of Trace Components)

The trace components contained in the halide solid electrolyte were analyzed by EPMA. Specifically, the trace components were analyzed as follows. A sample (powder) of the halide solid electrolyte was attached and fixed to a conductive tape (sample was adhered and fixed in a range of 5 mm × 5 mm), and the composition (quantitative) was investigated through compositional analysis by point analysis. Although not confirmed by the X-ray diffraction measurement, it was confirmed that Nb and Ga were contained in the halide solid electrolyte of Example 1. The content ratio of Nb was 0.07 at.%, and the content ratio of Ga was 0.004 at.%.

From the evaluation results of the halide solid electrolyte obtained in Example 1, according to the production method of the present disclosure, the oxide was successfully converted into a homogeneous halide, and as a result, a high ionic conductivity of 6.1 µS/cm was obtained. This ionic conductivity was at a level equal to or higher than that obtained from synthesis from fluoride raw materials, and with the production method of the present disclosure, a halide solid electrolyte having excellent characteristics was successfully obtained. The electronic conductivity was < 1.0 × 10⁻⁹ µS/cm, and it was confirmed that the halide solid electrolyte was an ionic conductive solid electrolyte having no electron-conducting properties (i.e., having a negligible level of electronic conductivity).

From the X-ray diffraction patterns shown in FIG. 6A and FIG. 6B, it was confirmed that, with the method of Example 1, a halide solid electrolyte including Li₂TiF₆ corresponding to the first crystal phase and Li₃AlF₆ corresponding to the second crystal phase can be obtained. In addition, from these X-ray diffraction patterns, it was confirmed that the halide solid electrolyte obtained in Example 1 had a crystal quality similar to that of the halide solid electrolyte of Comparative Example 1 synthesized by the conventional method, and compositional variations were suppressed compared with the halide solid electrolyte of Comparative Example 1. In addition, for the halide solid electrolyte of Example 1, in the X-ray diffraction pattern after the pulverization treatment, the peak changed to a broader peak than in the X-ray diffraction pattern before the pulverization treatment, and the progress of amorphization was confirmed. However, no new precipitate phase due to the pulverization treatment appeared. The changes in ionic conductivity, average particle diameter, and BET specific surface area before and after the pulverization treatment are as described in the explanation section for each evaluation item. From these results, it can be seen that the pulverization treatment may or may not necessarily be performed depending on the application of the halide solid electrolyte, etc., and the composition and the crystal phase of the halide solid electrolyte almost do not change regardless of the presence or absence of the pulverization treatment, so that excellent characteristics are maintained.

In addition, the amount of oxygen as an impurity in the halide solid electrolyte of Example 1 was 0.12 mass%, and it was confirmed that the oxygen in the oxide was replaced with fluorine. For the amount of oxygen, gas (CO₂, CO) generated by melting a sample (powder) of the halide solid electrolyte using a melt extraction-type device was measured with a detector, and the amount of oxygen was evaluated based on the measurement results. The amount of oxygen in the halide solid electrolyte of Example 1 was rather smaller than that in a halide solid electrolyte obtained by a synthesis method using a fluoride as a starting raw material. The amount of oxygen in the halide solid electrolyte obtained by the synthesis method using a fluoride as a starting raw material is normally greater than 0.5 mass% and is about 1.0 mass% or less. The reason for this is considered to be that moisture, oxygen, etc., taken into unstable fluoride raw materials during storage or a synthesis process such as handling remain even after synthesis. If fluoride raw materials are mixed and subjected to a solid-phase reaction without the use of a sealed jig as in the production method of the present disclosure, the Ti component will evaporate as titanium fluoride and disappear from the halide due to the open atmosphere. Therefore, only a halide solid electrolyte with an ionic conductivity of less than 1 µS/cm is obtained due to variations in composition. In this case, the heat treatment temperature for synthesis also needs to be a high temperature of 500°C to 600°C.

As described above, with the production method of the present disclosure, a halide solid electrolyte containing Li, Ti, M, and X can be produced as a halide solid electrolyte having less compositional variations, etc., and having high ionic conductivity similar to that with a conventional production method, by a normal synthesis process (i.e., without sealing, etc., and in a synthetic environment in atmospheric air). In addition, whereas the cost of halide raw materials is very high, inexpensive oxide raw materials are used in the production method of the present disclosure, so that the production cost of the halide solid electrolyte can be reduced.

### INDUSTRIAL APPLICABILITY

The production method for a halide solid electrolyte according to the present disclosure can be used, for example, as a production method for a solid electrolyte for secondary batteries such as all-solid-state batteries for use in various electronic devices or automobiles.

## Claims

1. A production method for a halide solid electrolyte, comprising
(A) performing halogenation treatment on an oxide mixture including a composite oxide containing Li and Ti and an oxide raw material containing Li and M, to obtain a halide solid electrolyte containing Li, Ti, M, and X, wherein
the M is at least one element selected from the group consisting of metal elements (excluding Li and Ti) and metalloid elements, and
the X is at least one selected from the group consisting of F, Cl, Br, and I.

2. The production method for a halide solid electrolyte according to claim 1, wherein
the halide solid electrolyte includes a first crystal phase represented by the following composition formula (1) and a second crystal phase represented by the following composition formula (2),
composition formula (1): Li₂TiX₆, and
composition formula (2): Li₃MX₆.

3. The production method for a halide solid electrolyte according to claim 1, wherein
the oxide raw material includes an oxide of Li and an oxide of M.

4. The production method for a halide solid electrolyte according to claim 1, wherein
the M includes Al.

5. The production method for a halide solid electrolyte according to claim 1, wherein
the X includes F.

6. The production method for a halide solid electrolyte according to claim 1, wherein
the oxide mixture is in particle form.

7. The production method for a halide solid electrolyte according to claim 1, wherein
the oxide mixture is substantially free of TiO₂.

8. The production method for a halide solid electrolyte according to claim 1, wherein
in the (A), the halogenation treatment on the oxide mixture is performed by performing heat treatment on a halogen-containing substance having thermal decomposition properties.

9. The production method for a halide solid electrolyte according to claim 8, wherein
the halogen-containing substance is in particle form.

10. The production method for a halide solid electrolyte according to claim 8, wherein
the (A) includes
(A-1) mixing the oxide mixture and the halogen-containing substance, and
(A-2) performing the halogenation treatment on the oxide mixture by performing heat treatment on a mixture including the oxide mixture and the halogen-containing substance obtained in the above (A-1).

11. The production method for a halide solid electrolyte according to claim 8, wherein
in the (A), a halogen gas is generated by performing heat treatment on the halogen-containing substance, and the halogen gas is brought into contact with the oxide mixture, thereby performing the halogenation treatment on the oxide mixture.

12. The production method for a halide solid electrolyte according to claim 8, wherein
the halogen-containing substance includes an ammonium salt.

13. The production method for a halide solid electrolyte according to claim 12, wherein
the ammonium salt includes NH₄F.

14. The production method for a halide solid electrolyte according to claim 8, wherein
the halogen-containing substance includes a resin.

15. The production method for a halide solid electrolyte according to claim 14, wherein
the resin includes a fluorine resin.

16. The production method for a halide solid electrolyte according to claim 8, wherein
the halogen-containing substance includes a substance from which inorganic components generated by thermal decomposition during the heat treatment in the (A), other than halogen elements, are substantially not incorporated into the halide solid electrolyte.

17. The production method for a halide solid electrolyte according to claim 8, wherein
the halogen-containing substance includes a plurality of types of halogen-containing compounds.

18. The production method for a halide solid electrolyte according to claim 1, wherein
in the (A), the halogenation treatment on the oxide mixture is performed at a temperature of 150°C or higher.

19. The production method for a halide solid electrolyte according to claim 1, further comprising (B) performing pulverization treatment on the halide solid electrolyte obtained in the (A), after the (A).

20. A halide solid electrolyte comprising:
Li;
Ti;
Al;
F; and
at least one selected from the group consisting of Nb and Ga.

21. The halide solid electrolyte according to claim 20, being substantially free of TiF₄.

22. The halide solid electrolyte according to claim 20, wherein
the halide solid electrolyte is in particle form.

23. The halide solid electrolyte according to claim 20, wherein
the halide solid electrolyte includes an amorphous phase.

24. The halide solid electrolyte according to claim 20, wherein
at least one selected from the group consisting of the following (1), (2), and (3) is satisfied in an X-ray diffraction pattern obtained by X-ray diffraction measurement of the halide solid electrolyte using Cu-Kα rays,
(1) there is no peak derived from TiF₄,
(2) there is no peak derived from LiF, and
(3) there is no peak derived from AlF₃.

25. A positive electrode material comprising the halide solid electrolyte according to claim 20.

26. A battery comprising a positive electrode including the positive electrode material according to claim 25.

27. A battery comprising:
a positive electrode;
a negative electrode; and
an electrolyte layer provided between the positive electrode and the negative electrode, wherein
at least one selected from the group consisting of the positive electrode, the negative electrode, and the electrolyte layer includes the halide solid electrolyte according to claim 20.
